(19) Europäisches Patentamt
European Patent Office
Office européen des brevets

(11) **EP 4 220 897 A1**

(12) **EUROPEAN PATENT APPLICATION**
published in accordance with Art. 153(4) EPC

(43) Date of publication:
**02.08.2023 Bulletin 2023/31**

(21) Application number: **20955299.1**

(22) Date of filing: **28.09.2020**

(51) International Patent Classification (IPC):
**H02K 1/27** (2022.01)

(52) Cooperative Patent Classification (CPC):
**H02K 1/27**

(86) International application number:
**PCT/JP2020/036684**

(87) International publication number:
**WO 2022/064706 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **NIGO, Masahiro
Tokyo 100-8310 (JP)**

(74) Representative: **Pfenning, Meinig & Partner mbB
Patent- und Rechtsanwälte
Theresienhöhe 11a
80339 München (DE)**

(54) **MOTOR, COMPRESSOR, REFRIGERATION CYCLE DEVICE, AND METHOD FOR MANUFACTURING MOTOR**

(57)     A motor includes a rotor having a rotor core having an annular shape about an axis and formed of a first core sheet subjected to press processing, and a permanent magnet embedded in the rotor core, and a stator surrounding the rotor from outside in a radial direction about the axis. The stator has a stator core formed of a second core sheet subjected to press processing. The thickness of the first core sheet is thicker than the thickness of the second core sheet. The first core sheet has an outer circumference, a magnet insertion hole in which the permanent magnet is inserted, and a bridge portion between the outer circumference and the magnet insertion hole. The minimum width of the bridge portion in the radial direction is smaller than the thickness of the first core sheet.

FIG. 4

EP 4 220 897 A1

## Description

## TECHNICAL FIELD

The present disclosure relates to a motor, a compressor, a refrigeration cycle apparatus, and a manufacturing method of the motor.

## BACKGROUND ART

In a permanent magnet-embedded motor, permanent magnets are inserted in magnet insertion holes formed in a rotor core. A bridge portion is formed between each magnet insertion hole and the outer circumference of the rotor core.

When a magnetic flux flows through the bridge portion, the magnetic flux is short circuited between adjacent permanent magnets. For this reason, the width of the bridge portion is desired to be narrow. Thus, Patent Reference 1 discloses a method of forming a narrow bridge portion by etching an electromagnetic steel sheet.

## PRIOR ART REFERENCE

## PATENT REFERENCE

Patent Reference 1: Japanese Patent Application Publication No. 2011-114927 (see paragraphs 0026 and 0027)

## SUMMARY OF THE INVENTION

## PROBLEM TO BE SOLVED BY THE INVENTION

However, the method by etching the electromagnetic steel sheet is costly to manufacture and not appropriate for mass production of motors.

The present disclosure is intended to solve the above-described problem, and an object of the present disclosure is to suppress a short circuit of magnetic flux via a bridge portion while suppressing an increase in manufacturing cost.

## MEANS OF SOLVING THE PROBLEM

A motor according to the present disclosure includes a rotor having a rotor core having an annular shape about an axis and formed of a first core sheet subjected to press processing, and a permanent magnet embedded in the rotor core, and a stator surrounding the rotor from outside in a radial direction about the axis. The stator has a stator core formed of a second core sheet subjected to press processing. A thickness of the first core sheet is thicker than a thickness of the second core sheet. The rotor core has an outer circumference, a magnet insertion hole in which the permanent magnet is inserted, and a bridge portion between the outer circumference and the magnet insertion hole. A minimum width of the bridge portion in the radial direction is smaller than the thickness of the first core sheet.

## EFFECTS OF THE INVENTION

With the above-described configuration, the minimum width of the bridge portion is smaller than the thickness of the first core sheet, and thus it is possible to suppress a short circuit of magnetic flux via the bridge portion. Since the thickness of the first core sheet is thicker than the thickness of the second core sheet, deformation of the bridge portion can be suppressed during press processing. Since the press processing can be used, an increase in manufacturing cost can be suppressed.

## BRIEF DESCRIPTION OF THE DRAWINGS

FIG. 1 is a cross-sectional view illustrating a motor of a first embodiment.
FIG. 2 is a longitudinal-sectional view illustrating the motor of the first embodiment.
FIG. 3 is an enlarged view illustrating a part of the motor of the first embodiment.
FIG. 4 is a diagram illustrating facing portions of a magnetic pole of a rotor and a tooth of a stator of the first embodiment.
FIG. 5 is an enlarged view illustrating the facing portions of the magnetic pole of the rotor and the tooth of the stator illustrated in FIG. 4.
FIG. 6 is a diagram for explaining a short circuit of magnetic flux in a bridge portion of the first embodiment.
FIG. 7(A) is a flowchart illustrating a press processing process for forming a first core sheet of the first embodiment, and FIG. 7(B) is a flowchart illustrating a press processing process for forming a second core sheet.
FIG. 8 is a plan view illustrating an electromagnetic steel sheet from which the first core sheets are formed.
FIG. 9 is a plan view illustrating an electromagnetic steel sheet from which the second core sheets are formed.
FIG. 10 is a flowchart illustrating a manufacturing process of the motor in the first embodiment.
FIG. 11 is a plan view illustrating another example of an electromagnetic steel sheet from which the second core sheets are formed.
FIG. 12 (A) is a schematic diagram for explaining the press processing of the electromagnetic steel sheet, and FIG. 12(B) is a schematic diagram illustrating a press die.
FIG. 13 is a schematic diagram illustrating a processed end surface of the electromagnetic steel sheet.
FIG. 14 (A) is a diagram illustrating a state in which magnet insertion holes are formed in the first core sheet, and FIG. 14(B) is a diagram illustrating a state in which bridge portions are formed in the first core sheet.

FIG. 15 (A) is a diagram illustrating a forming step of the bridge portion, and FIG. 15 is a diagram illustrating a forming step of a bridge portion in a reference example.

FIG. 16 is a longitudinal-sectional view illustrating a motor of the comparative example.

FIG. 17 is an enlarged diagram illustrating a part of the motor of the comparative example.

FIG. 18 is a diagram illustrating the relationship between a magnetic pole of a rotor and a tooth of a stator of the comparative example.

FIG. 19 is an enlarged diagram illustrating a bridge portion of the rotor and its surroundings of the comparative example.

FIG. 20 is a diagram for explaining a short circuit of magnetic flux in the bridge portion of the comparative example.

FIG. 21 is a flowchart illustrating a press processing process for forming a first core sheet and a second core sheet of the comparative example.

FIG. 22 is a plan view illustrating an electromagnetic steel sheet from which the first core sheets and the second core sheets of the comparative example are formed.

FIG. 23 is a longitudinal-sectional view illustrating a motor of a second embodiment.

FIG. 24 is a longitudinal-sectional view illustrating a compressor to which the motor of each embodiment is applicable.

FIG. 25 is a diagram illustrating a refrigeration cycle apparatus to which the motor of each embodiment is applicable.

## MODE FOR CARRYING OUT THE INVENTION

### First Embodiment

(Configuration of Motor)

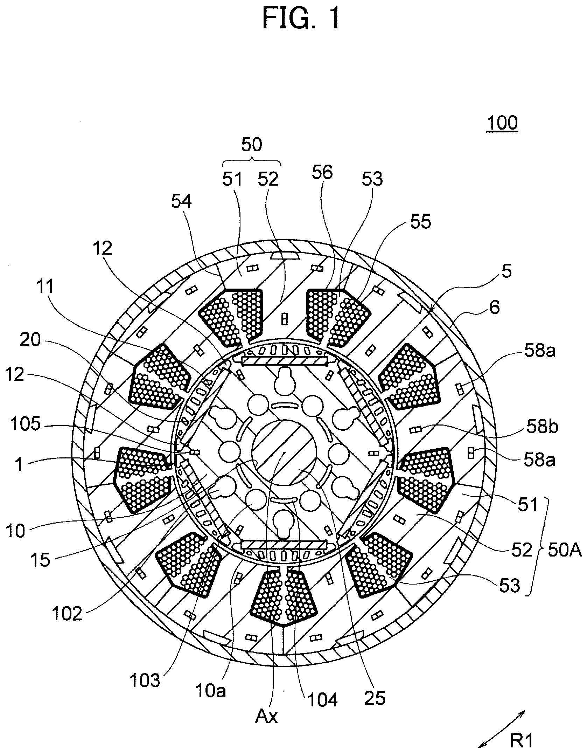

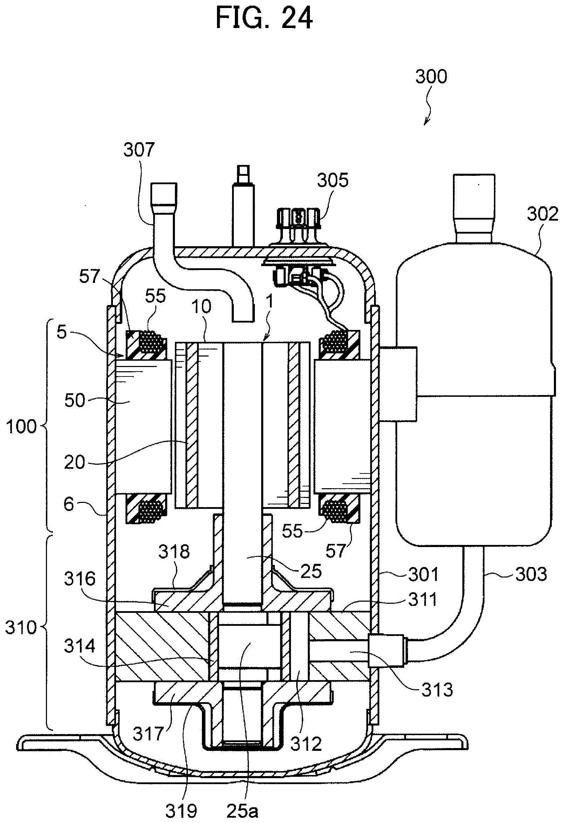

FIG. 1 is a cross-sectional view illustrating a motor 100 of a first embodiment. The motor 100 illustrated in FIG. 1 is a permanent magnet-embedded motor and is used in, for example, a compressor 300 (FIG. 24). The motor 100 is driven by an inverter.

The motor 100 includes a rotor 1 having a shaft 25, which is a rotary shaft, and a stator 5 provided so as to surround the rotor 1. An air gap of, for example, 0.3 to 1.0 mm, is formed between the stator 5 and the rotor 1. The stator 5 is incorporated in a cylindrical shell 6 of the compressor 300 (FIG. 24) to be described later.

Hereinafter, the direction of an axis Ax, which is a rotation center axis of the rotor 1, is referred to as an "axial direction". The radial direction about the axis Ax is referred to as a "radial direction". The circumferential direction about the axis Ax is referred to as a "circumferential direction" and indicated by the arrow R1 in FIG. 1 and other figures. A sectional view in a plane parallel to the axis Ax is referred to as a "longitudinal-sectional view". A sectional view in a plane orthogonal to the axis Ax is referred to as a "cross-sectional view".

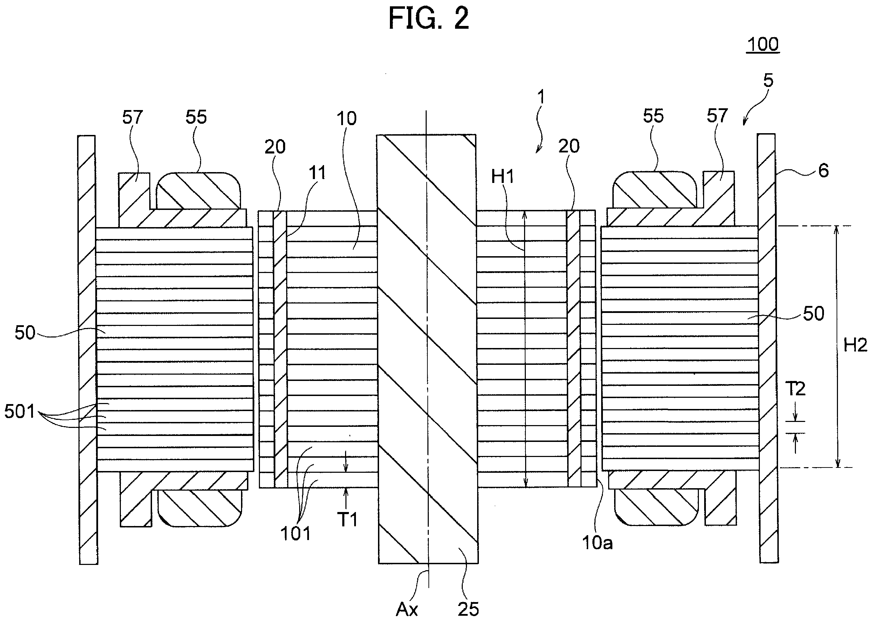

The rotor 1 includes a rotor core 10 having an annular shape about the axis Ax and permanent magnets 20 embedded in the rotor core 10. The rotor core 10 is composed of first core sheets 101 (FIG. 2) which are stacked in the axial direction and fixed together by crimping portions 105.

A center hole 15 is formed at the center of the rotor core 10 in the radial direction. The above-described shaft 25 is fixed to the center hole 15 of the rotor core 10 by shrink-fitting, press-fitting, or the like. The rotor core 10 has an outer circumference 10a having a circular shape.

A plurality of magnet insertion holes 11 are formed along the outer circumference 10a of the rotor core 10. One permanent magnet 20 is inserted in each magnet insertion hole 11. Each magnet insertion hole 11 corresponds to one magnetic pole. The rotor core 10 has six magnet insertion holes 11, and thus the number of poles of the rotor 1 is six. Incidentally, the number of poles of the rotor 1 is not limited to six and only needs to be two or more.

The permanent magnet 20 is a flat-plate shaped member that is elongated in the axial direction of the rotor core 10. The permanent magnet 20 has a width in the circumferential direction, and a thickness in the radial direction. The thickness of the permanent magnet 20 is constant in the width direction and is, for example, 2.0 mm. The permanent magnet 20 is composed of a rare earth magnet that contains, for example, neodymium (Nd), iron (Fe), and boron (B) .

Each permanent magnet 20 is magnetized in its thickness direction. The permanent magnets 20 inserted in adjacent magnet insertion holes 11 have opposite magnetic pole surfaces on the outer side in the radial direction. Incidentally, two or more permanent magnets 20 may be inserted in each magnet insertion hole 11.

The stator 5 has a stator core 50 surrounding the rotor core 10 from outside in the radial direction and a coil 55 wound on the stator core 50. The stator core 50 is composed of second core sheets 501 (FIG. 2) which are stacked in the axial direction and fixed together by crimping portions 58a and 58b.

The stator core 50 includes a yoke 51 having an annular shape about the axis Ax and a plurality of teeth 52 extending inward in the radial direction from the yoke 51. The teeth 52 are arranged at equal intervals in the circumferential direction. The number of teeth 52 is nine in this example. Incidentally, the number of teeth 52 is not limited to nine but only needs to be two or more.

A slot 53, which is a space to house the coil 55, is formed between teeth 52 adjacent to each other in the circumferential direction. The number of slots 53 is the same as the number of teeth 52, which is nine in this example. That is, the ratio of the number of poles in the rotor 1 to the number of slots in the stator 5 is 2:3. However, the ratio is not limited to 2:3.

The second core sheets 501 constituting the stator core 50 are fixed together by the crimping portions 58a and 58b. The crimping portions 58a are formed in the yoke 51, while the crimping portions 58b are formed in the teeth 52. Incidentally, the positions of the crimping portions 58a and 58b are not limited to these positions.

The stator core 50 is composed of a plurality of split cores 50A which are combined in the circumferential direction. Each split core 50A is a block including one tooth 52. The split cores 50A are joined together by welding at split surfaces 54 formed in the yoke 51. Incidentally, the split cores 50A may be combined to each other at thin-walled portions formed at outer circumferential portions of the split surfaces 54.

The coil 55 is formed of a magnet wire wound around each tooth 52 in a concentrated winding. The wire diameter of the magnet wire is, for example, 0.8 mm. The number of turns of the coil 55 around one tooth 52 is, for example, 70 turns.

The number of turns and the wire diameter of the coil 55 are determined depending on the required specifications of the motor 100, such as a rotational speed and a torque, the applied voltage, and the cross-sectional area of the slot 53. The coil 55 includes winding portions of three phases, namely, U-phase, V-phase and W-phase winding portions, which are connected in Y-connection.

An insulating film 56 having a thickness of 0.1 to 0.2 mm and formed of a resin such as polyethylene terephthalate (PET) is attached to the inner surface of each slot 53. An insulator 57 (FIG. 2) formed of a resin such as polybutylene terephthalate (PBT) is attached to each end of the stator core 50 in the axial direction. The insulating film 56 and the insulator 57 constitute an insulating portion that insulates the stator core 50 from the coil 55.

FIG. 2 is a longitudinal-sectional view illustrating the motor 100. A length H1 of the rotor core 10 in the axial direction is longer than a length H2 of the stator core 50 in the axial direction. The rotor core 10 protrudes from the stator core 50 on both sides thereof in the axial direction.

For example, the length H1 of the rotor core 10 is 50 mm, while the length H2 of the stator core 50 is 45 mm. The length in the axial direction is also referred to as a height in the stacking direction. A balance weight may be provided at each end of the rotor core 10 in the axial direction so as to increase inertia.

The rotor core 10 is a stacked body in which the first core sheets 101 are stacked in the axial direction. The first core sheets 101 are formed by press processing on an electromagnetic steel sheet.

A thickness T1 of the first core sheet 101 is 0.50 mm. A Si content of the first core sheet 101 is 3.3%. The Si content is a content (wt%) of silicon (Si) in the first core sheet 101.

A Vickers hardness Hv of the first core sheet 101 is 180. An iron loss density of the first core sheet 101 is 1.18 W/kg. The iron loss density is a measurement result obtained by a test in conformity with JIS_C2550 in which a magnetic flux density of 1.0 T is induced at a frequency of 50Hz.

The stator core 50 is a stacked body in which the second core sheets 501 are stacked in the axial direction. The second core sheets 501 are formed by press processing on an electromagnetic steel sheet.

A thickness T2 of the second core sheet 501 is 0.35 mm. The Si content of the second core sheet 501 is 3.5%. A Vickers hardness Hv of the second core sheet 501 is 205. An iron loss density of the second core sheet 501 is 0.98 W/kg.

When the first core sheet 101 and the second core sheet 501 are compared, the thickness T1 of the first core sheet 101 is thicker than the thickness T2 of the second core sheet 501. The Si content of the first core sheet 101 is smaller than the Si content of the second core sheet 501. The Vickers hardness Hv of the first core sheet 101 is lower than the Vickers hardness Hv of the second core sheet 501. The iron loss density of the first core sheet 101 is higher than the iron loss density of the second core sheet 501.

That is, the first core sheet 101 can be easily subjected to press processing, i.e., has good processability, as compared to the second core sheet 501. Such a first core sheet 101 and a second core sheet 501 can be obtained by changing the type and grade of the electromagnetic steel sheets. The functions and effects of the core sheets 101 and 501 depending on differences in their properties will be described later.

In this regard, the above-described values of the thickness, the Si content, the Vickers hardness, and the iron loss density of the core sheets 101 and 501 are merely examples.

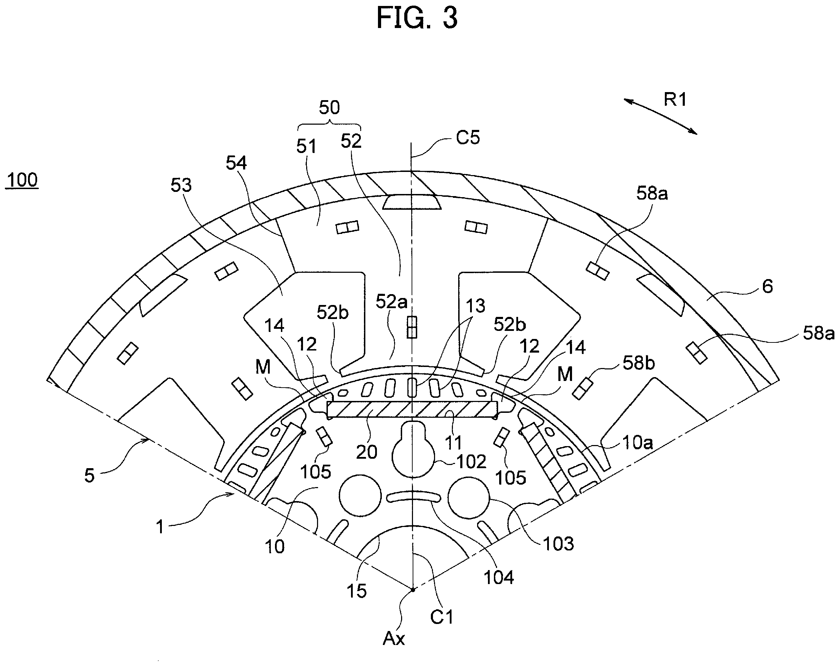

FIG. 3 is an enlarged diagram illustrating facing portions of the rotor 1 and the stator 5. The permanent magnet 20 is inserted in each magnet insertion hole 11 of the rotor 1 as described above. The center of the magnet insertion hole 11 in the circumferential direction is a pole center. An inter-pole portion M is formed between adjacent magnet insertion holes 11.

The magnet insertion hole 11 extends linearly in a direction orthogonal to a straight line in the radial direction that passes through the pole center, i.e., a magnetic pole center line C1. Incidentally, the magnet insertion hole 11 may extend in a V shape that is convex toward the axis Ax side.

A plurality of slits 13 are formed on the outer side of each magnet insertion hole 11 in the radial direction in the rotor core 10. Each of the slits 13 extends in the radial direction and has a width of, for example, 1 mm in the circumferential direction. The slits 13 are formed to make the magnetic flux distribution of the permanent magnet 20 closer to a sine wave. In this example, seven slits 13 are formed symmetrically with respect to the magnetic pole center line C1. However, the number and arrangement of the slits 13 are not limited.

In the rotor core 10, through holes 102 and 103 and slits 104 are formed on the inner side of the magnet insertion holes 11 in the radial direction. The through holes 102 and 103 and the slits 104 are used as refrigerant flow paths through which the refrigerant passes or as holes into which jigs are inserted.

The through hole 102 is formed on the magnetic pole center line C1. The through hole 103 is formed on the inner side of the inter-pole portion M in the radial direction. The slit 104 is formed on the inner side of the through hole 102 in the radial direction and extends in an arc shape in the circumferential direction. Incidentally, the through holes 102 and 103 and the slits 104 are not necessarily provided.

The crimping portions 105 for fixing the first core sheets 101 of the rotor core 10 are formed on the inner side of the inter-pole portions M in the radial direction. However, each crimping portion 105 is not necessarily formed at such a position, but only needs to be formed at any position at which the crimping portion 105 interferes as least as possible with the magnetic path in the rotor core 10.

The magnet insertion hole 11 has flux barriers 12 at both ends thereof in the circumferential direction. The flux barrier 12 is an opening formed at each end of the magnet insertion hole 11 in the circumferential direction and located on the outer side of the permanent magnet 20 in the circumferential direction.

A bridge portion 14 is formed between the flux barrier 12 and an outer circumference 10a of the rotor core 10. The bridge portion 14 is a thin-walled portion extending in the circumferential direction along the outer circumference 10a.

The tooth 52 of the stator 5 has a tooth tip portion 52a facing the outer circumference 10a of the rotor core 10. The width of the tooth tip portion 52a in the circumferential direction is wider than other portions of the tooth 52. A straight line in the radial direction that passes through the center of the tooth 52 in the circumferential direction is referred to as a tooth center line C5.

The magnetic flux emanating from the permanent magnet 20 is distributed in a sine wave shape that has its peak on the magnetic pole center line C1. Therefore, as illustrated in FIG. 3, when the center of the permanent magnet 20 faces the tooth 52 of the stator 5, that is, when the magnetic pole center line C1 coincides with the tooth center line C5, the magnetic flux emanating from the permanent magnet 20 flows the most into the tooth 52 and interlinks with the coil 55.

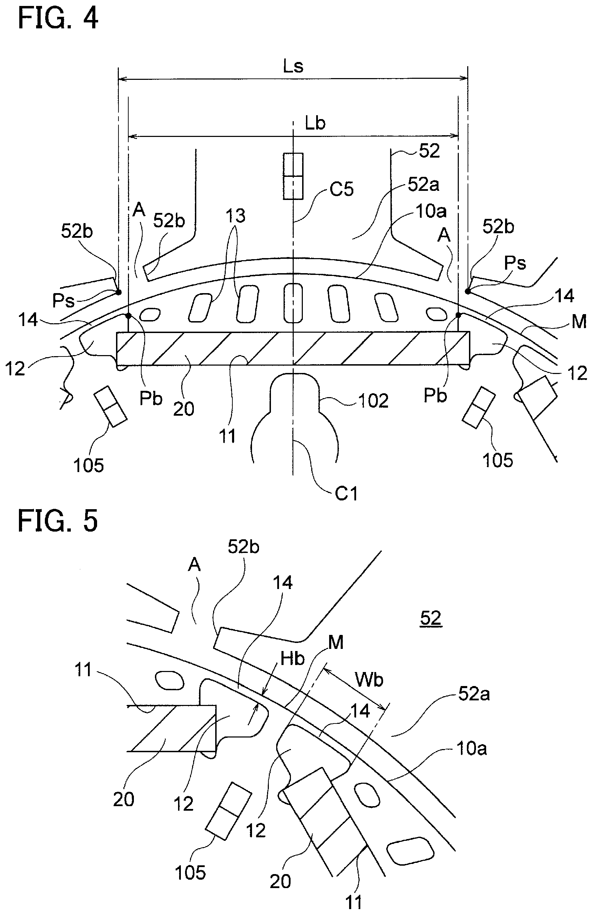

FIG. 4 is a diagram illustrating facing portions of the magnetic pole of the rotor 1 and the tooth 52. End surfaces 52b are formed at both ends of the tooth tip portion 52a of the tooth 52 in the circumferential direction. A slot opening A is formed between the end surfaces 52b of the adjacent teeth 52. The slot opening A serves as an entrance of the slot 53 facing the rotor 1.

The magnet insertion hole 11 faces two slot openings A on both sides of the tooth 52 in a state where the center of the permanent magnet 20 faces the tooth 52. In this state, two bridge portions 14 at both ends of the magnet insertion hole 11 face the respective tooth tip portions 52a of the tooth 52 on both sides of the tooth 52 that faces the permanent magnet 20.

FIG. 5 is an enlarged diagram illustrating the bridge portions 14 and their surroundings. The bridge portion 14 extends in the circumferential direction along the outer circumference 10a of the rotor core 10. The width of the bridge portion 14 in the radial direction is uniform along the extending direction of the bridge portion 14 in this example. However, the width of the bridge portion 14 in the radial direction may vary.

A minimum width of the bridge portion 14 in the radial direction is denoted by Hb. A length of the bridge portion 14 in the circumferential direction is denoted by Wb. The minimum width Hb of the bridge portion 14 is set to a width so that the bridge portion 14 can suppress a short circuit of magnetic flux between adjacent permanent magnets 20.

Specifically, the minimum width Hb of the bridge portion 14 is set smaller than the thickness T1 of the first core sheet 101 (FIG. 2) (Hb < T1). For example, when the thickness T1 of the first core sheet 101 is 0.50 mm, the minimum width Hb of the bridge portion 14 is 0.30 mm. The length Wb of the bridge portion 14 is longer than the minimum width Hb.

With reference to FIG. 4 again, the minimum interval between two bridge portions 14 at both ends of the magnet insertion hole 11 is denoted by Lb. The minimum interval Lb is an interval between two end points Pb closest to each other in the two bridge portions 14 located at both ends of the magnet insertion hole 11.

The maximum interval between two slot openings A facing the magnet insertion hole 11 is denoted by Ls. The maximum interval Ls is an interval between two end points Ps far from each other at inner circumferential side ends of the two slot openings A facing the magnet insertion hole 11.

In the first embodiment, the minimum interval Lb between the two bridge portions 14 at both ends of the magnet insertion hole 11 is narrower than the maximum interval Ls between the two slot openings A facing the magnet insertion hole 11 (Lb < Ls).

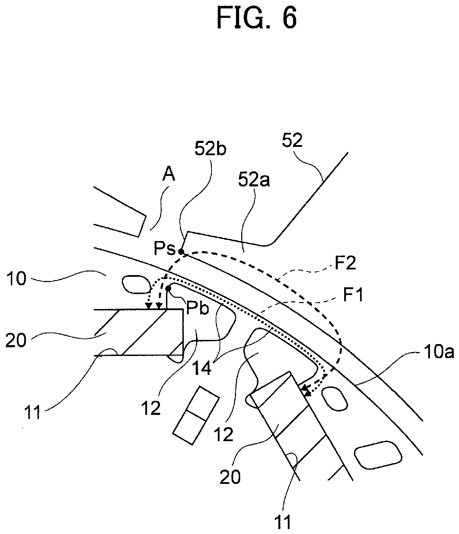

FIG. 6 is a diagram for explaining a short circuit of magnetic flux between adjacent permanent magnets 20. The magnetic flux between the adjacent permanent magnets 20 flows through the bridge portions 14, as indicated by the arrow F1. By making the minimum width Hb of the bridge portion 14 narrower, a short circuit of the magnetic flux between the adjacent permanent magnets 20 can be reduced. A forming method of the bridge portion 14 with the narrow minimum width Hb will be described later.

Further, when magnetic saturation occurs in the bridge portions 14, it causes a short circuit of magnetic flux from the bridge portions 14 through the tooth tip portions 52a as indicated by the arrow F2. For this reason, the minimum interval Lb between the two bridge portions 14 at both ends of the magnet insertion hole 11 is made narrower than the maximum interval Ls between the two slot openings A facing the magnet insertion hole 11 (Lb < Ls).

As described above, in a state where the center of the permanent magnet 20 faces the tooth 52, the magnetic flux emanating from the permanent magnet 20 flows the most into the tooth 52. At this time, when Lb < Ls is satisfied, the end point Pb of the bridge portion 14 is located closer to the pole center than the end point Ps of the tooth tip portion 52a of the tooth 52.

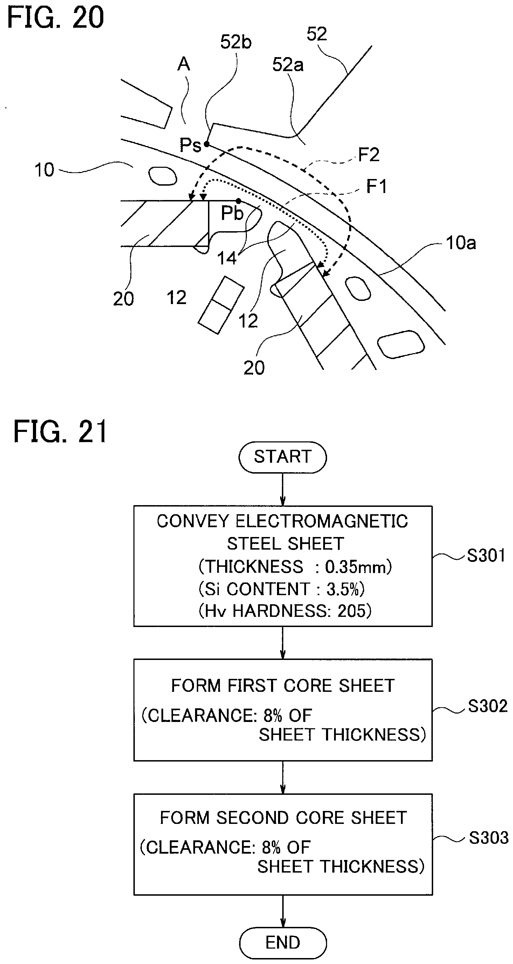

Consequently, as indicated by the arrow F2 in FIG. 6, the magnetic flux between the permanent magnet 20 and the tooth tip portion 52a flows around to the pole center side (left side in the figure), and thus a short circuit of magnetic flux via the tooth tip 52a is less likely to occur. The case where Lb > Ls is satisfied will be described in the comparative example (FIG. 20).

(Manufacturing Method of Motor)

Next, a manufacturing method of the motor 100 of the first embodiment will be described. The first core sheet 101 constituting the rotor core 10 and the second core sheet 501 constituting the stator core 50 are formed of different electromagnetic steel sheets subjected to press processing.

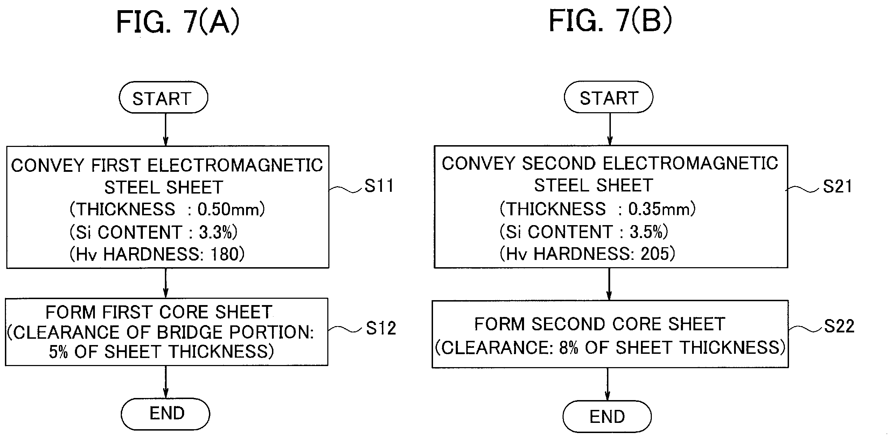

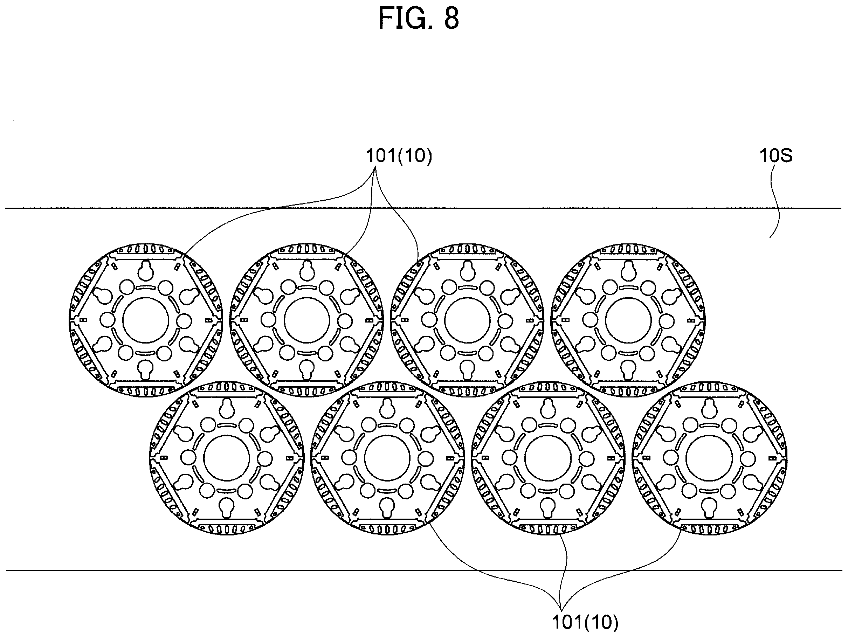

FIG. 7(A) is a flowchart illustrating a press processing process for forming the first core sheets 101. FIG. 8 is a plan view illustrating an electromagnetic steel sheet 10S from which the first core sheets 101 are punched.

As illustrated in FIG. 8, the electromagnetic steel sheet 10S is a strip-shaped steel sheet that is elongated in one direction and is also referred to as a first electromagnetic steel sheet. The electromagnetic steel sheet 10S has a thickness of 0.50 mm, a Si content of 3.3%, a Vickers hardness Hv of 180, and an iron loss density of 1.18 W/kg.

The electromagnetic steel sheet 10S is conveyed in the longitudinal direction (step S11), and then punched using a press die in multiple stages to form the first core sheets 101 (step S12). In this example, the electromagnetic steel sheet 10S is punched into the respective shapes of the center hole 15, the through holes 102 and 103, the slits 104, the slits 13, the magnet insertion holes 11 (including the flux barriers 12) and the outer circumference 10a.

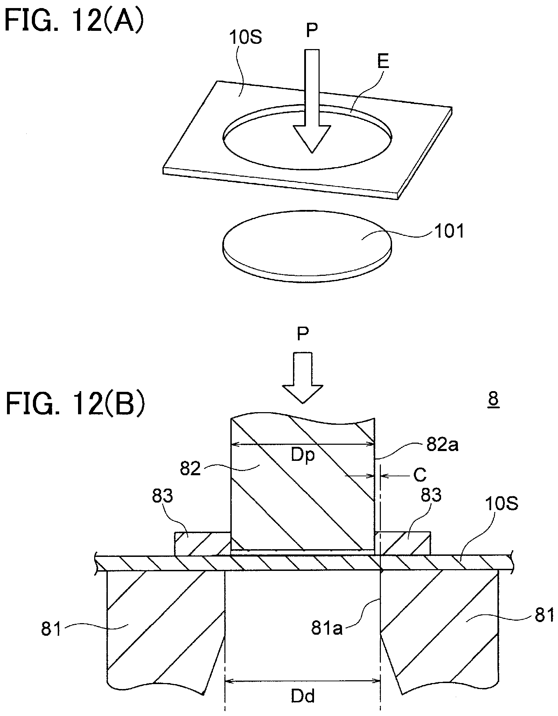

A die clearance of the press die at this time is 5% of the thickness T1 of the electromagnetic steel sheet 10S, specifically 0.025 mm. These will be described later with reference to FIGS. 12 (A) and 12 (B).

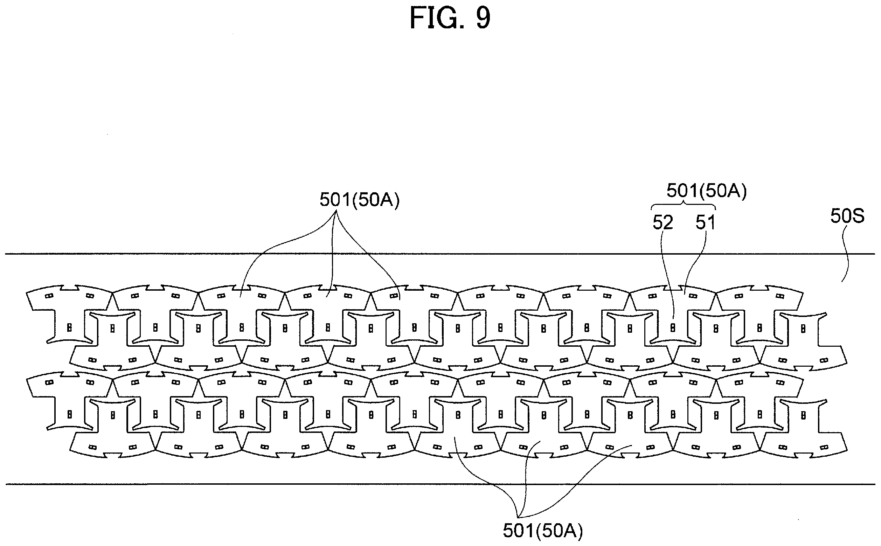

FIG. 7(B) is a flowchart illustrating a press processing process for forming the second core sheets 501. FIG. 9 is a plan view illustrating an electromagnetic steel sheet 50S from which the second core sheets 501 are punched.

As illustrated in FIG. 9, the electromagnetic steel sheet 50S is a strip-shaped steel sheet that is elongated in one direction and is also referred to as a second electromagnetic steel sheet. The electromagnetic steel sheet 50S has a thickness of 0.35 mm, a Si content of 3.5%, a Vickers hardness Hv of 205, and an iron loss density of 0.98 W/kg.

The electromagnetic steel sheet 50S is conveyed in the longitudinal direction (step S21), and then punched using a press die to form the second core sheets 501 (step S22). In this example, the electromagnetic steel sheet 50S is punched into a shape in which the split cores 50A are linearly arranged.

A die clearance of the press die at this time is 8% of the thickness T2 of the electromagnetic steel sheet 50S, specifically 0.028 mm.

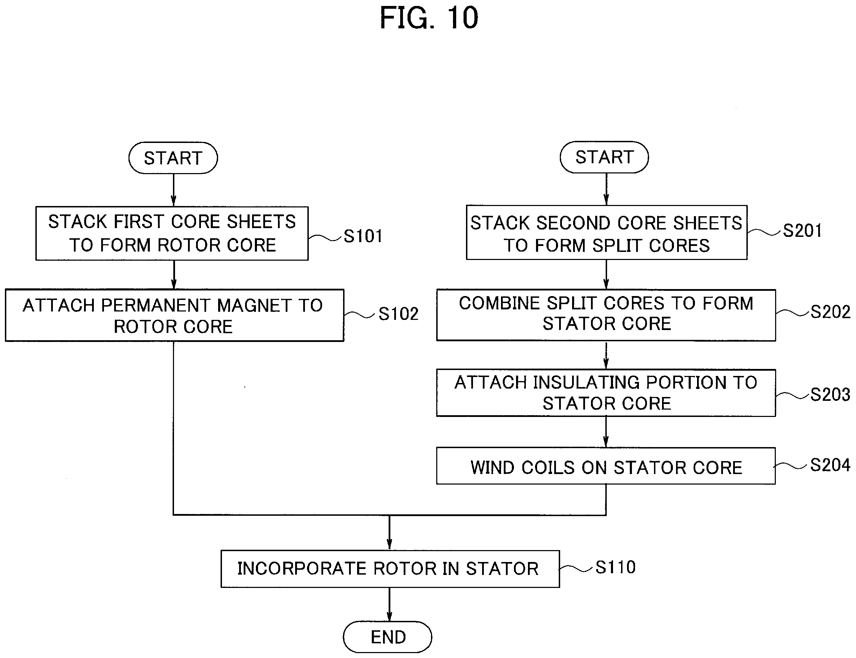

FIG. 10 is a flowchart illustrating an assembly process of the motor 100. First, the first core sheets 101 obtained by the process of FIG. 7 (A) are stacked in the axial direction to form the rotor core 10 (step S101). Thereafter, the permanent magnets 20 are embedded in the rotor core 10. That is, the permanent magnets 20 are inserted into the magnet insertion holes 11 of the rotor core 10 (step S102). Balance weights are fixed to the rotor core 10 as necessary. Thus, the rotor 1 is completed.

Further, the second core sheets 501 obtained by the process of FIG. 7(B) are stacked in the axial direction to form the split cores 50A (step S201). Then, the split cores 50A are combined in an annular shape and joined together by welding or the like to form the stator core 50 (step S202). Then, the insulating portion is attached to the stator core 50 (step S203), and the coil 55 is wound on the stator core 50 (step S204). Thus, the stator 5 is completed.

The rotor 1 is incorporated inside the stator 5 formed in this way (step S110). Therefore, the motor 100 is completed.

Although the coil 55 is wound after forming the annular stator core 50 in this example, the coil 55 may be wound on the split cores 50A, and thereafter the split cores 50A may be combined in an annular shape.

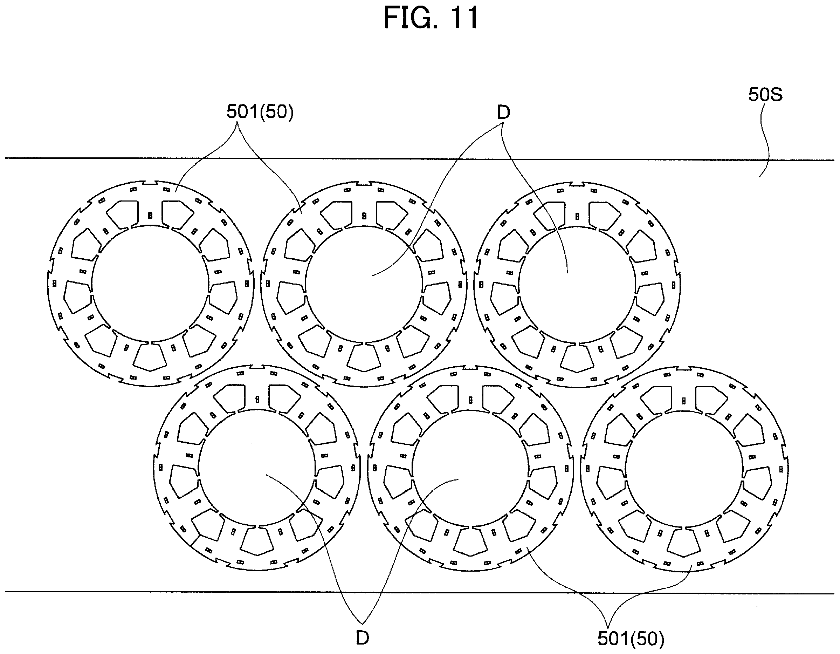

Incidentally, the stator core 50 is not necessarily limited to a structure in which the split cores 50A are combined, but may have an annular integrated structure. In this case, as illustrated in FIG. 11, when the electromagnetic steel sheet 50S is punched into annular shapes to form the second core sheets 501, inner parts of the respective second core sheets 501 of the electromagnetic steel sheet 50S (denoted by reference character D) are not used, and thus these parts are wasted. That is, the electromagnetic steel sheet 50S cannot be utilized efficiently.

In contrast, as illustrated in FIG. 9, when the electromagnetic steel sheet 50S is punched into the shapes of the split cores 50A, the waste of the electromagnetic steel sheet 50S can be reduced, for example, by punching the electromagnetic steel sheet 50S so that the split cores 50 are arranged side by side linearly. That is, the material of the electromagnetic steel sheet 50S can be utilized efficiently.

Next, the press processing of the first core sheet 101 described with reference to FIG. 7(A) will be further described. FIG. 12(A) is a schematic diagram illustrating a state in which the electromagnetic steel sheet 10S is punched to form the first core sheet 101. For convenience of illustration, the first core sheet 101 is shown in a disc shape. FIG. 12(B) is a schematic diagram illustrating a press die 8.

As illustrated in FIG. 12(A), the electromagnetic steel sheet 10S is punched by being pressed in its thickness direction to form the first core sheet 101 by shearing. As illustrated in FIG. 12(B), the press die 8 has a die 81 supporting the electromagnetic steel sheet 10S from below and a punch 82 to apply the pressure P to the electromagnetic steel sheet 10S from above.

The inner dimension of the die 81 is denoted by Dd, and the outer dimension of the punch 82 is denoted by Dp. Shearing force is applied to the electromagnetic steel sheet 10S between a tooth surface 81a of the die 81 and a tooth surface 82a of the punch 82. A clearance is set between the tooth surface 81a of the die 81 and the tooth surface 82a of the punch 82. This clearance is referred to as a die clearance C.

When the electromagnetic steel sheet 10S for the rotor core 10 is punched, the die clearance C of the press die 8 is set to 5% of the thickness T1 of the electromagnetic steel sheet 10S. As described later, the die clearance C when the electromagnetic steel sheet 10S is punched to form portions other than the bridge portion 14 is not necessarily 5% of the thickness T1, but may be, for example, 8% of the thickness T1.

On the other hand, when the electromagnetic steel sheet 50S for the stator core 50 is punched, the die clearance C between the die 81 and the punch 82 is set to 8% of the thickness of the electromagnetic steel sheet 50S.

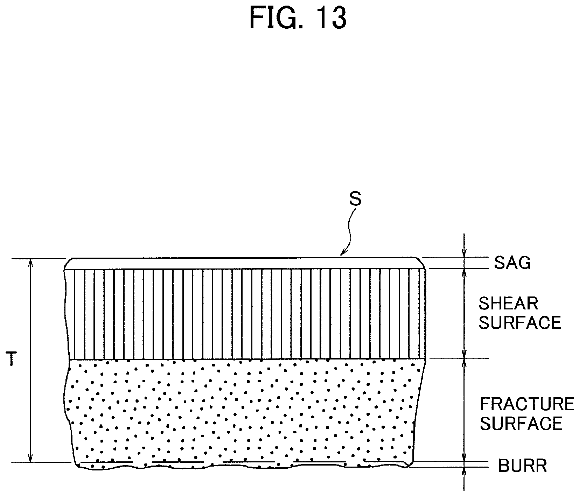

FIG. 13 is a diagram illustrating a state of a processed surface of a general electromagnetic steel sheet (referred to as an electromagnetic steel sheet S). The cut surface (denoted by reference character E in FIG. 12(A)) formed by punching the electromagnetic steel sheet S is referred to as the processed surface. On the processed surface, a sag, a shear surface, a fracture surface and a burr are formed in the shearing direction.

The sag is a warped surface formed by the surface of the electromagnetic steel sheet S which is deformed by being pressed down by the punch 82. The shear surface is a flat surface formed by rubbing against the punch 82, and scratches are generated in the shearing direction. The fracture surface is a surface that is broken by cracking and is rougher than the shear surface.

The burr is a protrusion formed when the electromagnetic steel sheet S is pressed down by the punch 82.

When the sag, the fracture surface, and the burr are large, it may cause the reduction in dimensional accuracy. Thus, it is desirable that the sag, the fracture surface, and the burr are small.

As the die clearance C increases, the sag, the fracture surface and the burr tend to increase, and the shear surface tends to decrease, which results in lower processing accuracy. As the die clearance C decreases, the sag, the fracture surface and the burr tend to decrease, and the shear surface tends to increase, which results in higher processing accuracy.

In order to make the minimum width Hb of the bridge portion 14 narrower, it is desirable that the die clearance C is small. However, when the die clearance C is small, wear of the press die 8 may occur, that is, die wear may occur. As the die wear progresses, it develops into abnormal wear called die galling.

In this example, the Si content of the first core sheet 101 is reduced to thereby reduce the hardness of the first core sheet 101, so as to suppress die wear and die galling when the die clearance C is made small.

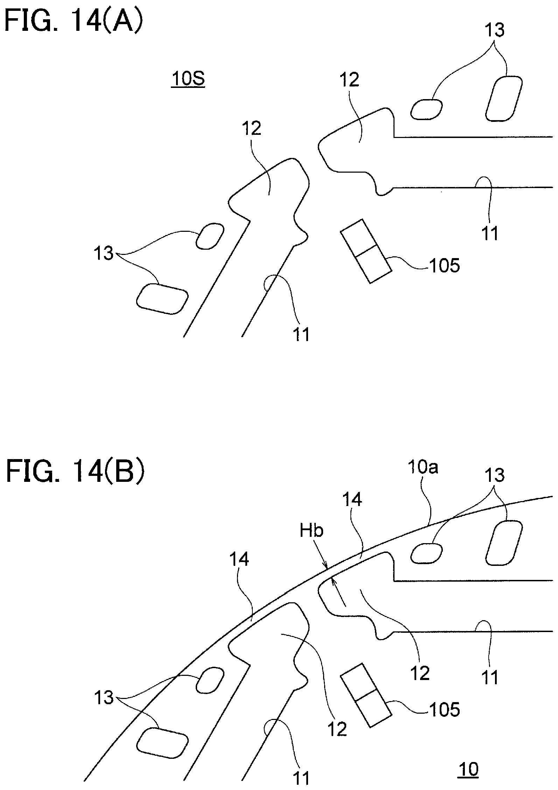

FIG. 14(A) is a diagram illustrating a state immediately before the bridge portion 14 is formed by punching the electromagnetic steel sheet 10S. As illustrated in FIG. 14(A), the magnet insertion holes 11 including the flux barriers 12 are formed.

FIG. 14(B) is a diagram illustrating a state where the bridge portions 14 are formed by punching the electromagnetic steel sheet 10S. As illustrated in FIG. 14(B), the outer circumference 10a of the rotor core 10 is formed by punching the electromagnetic steel sheet 10S. By the formation of the outer circumference 10a of the rotor core 10, the bridge portions 14 are formed between the outer circumference 10a and the flux barriers 12.

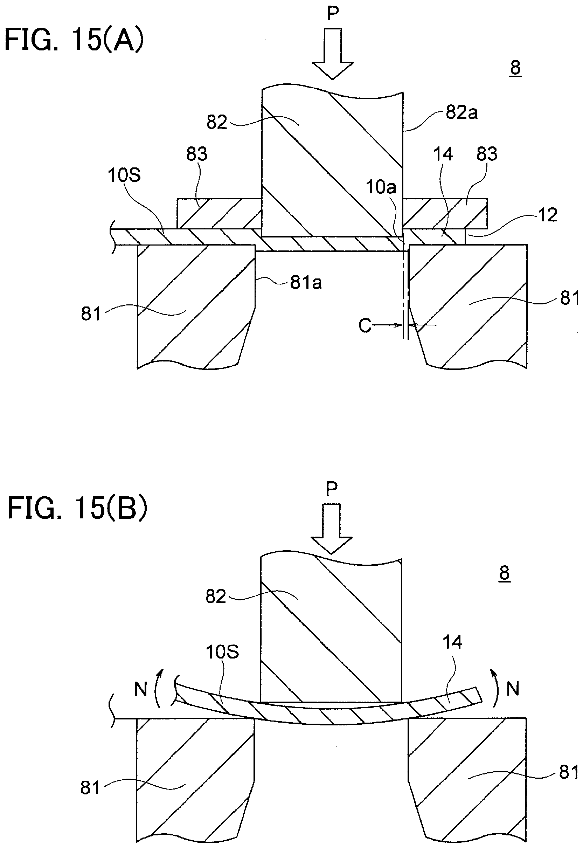

FIG. 15(A) is a diagram illustrating a forming step of the bridge portion 14 illustrated in FIG. 14(B). In forming the bridge portion 14, the electromagnetic steel sheet 10S is cut at the outer circumference 10a of the rotor core 10. The die clearance C of the press die 8 for forming the bridge portion 14 is 5% of the thickness T1 of the electromagnetic steel sheet 10S.

At this time, it is desirable to hold the bridge portion 14 by a plate holder 83 so that the bridge portion 14 does not float up from the die 81.

If the bridge portion 14 is not held by the plate holder 83, as illustrated in FIG. 15(B), warping of the electromagnetic steel sheet 10S pressed by the punch 82 may cause deformation, such as warping (curling), of the bridge portion 14. As the width of the bridge portion 14 decreases, deformation of the bridge portion 14 is more likely to occur.

By holding the bridge portions 14 using the plate holder 83, the deformation of the bridge portion 14 can be suppressed even when the width of the bridge portion 14 is made narrower.

Incidentally, in the rotor core 10, the bridge portion 14 has the narrowest width and therefore requires high processing accuracy. In contrast, the magnet insertion hole 11, the slit 13, the center hole 15, and the like of the rotor core 10 do not require high processing accuracy, as compared to that required for the bridge portion 14.

For this reason, in punching the electromagnetic steel sheet 10S to form the magnet insertion holes 11, the slits 13, the center hole 15, and the like, the die clearance C in the press die 8 does not need to be set to 5% of the thickness T1 of the electromagnetic steel sheet 10S and may be set to, for example, 8% of the thickness T1.

(Comparative Example)

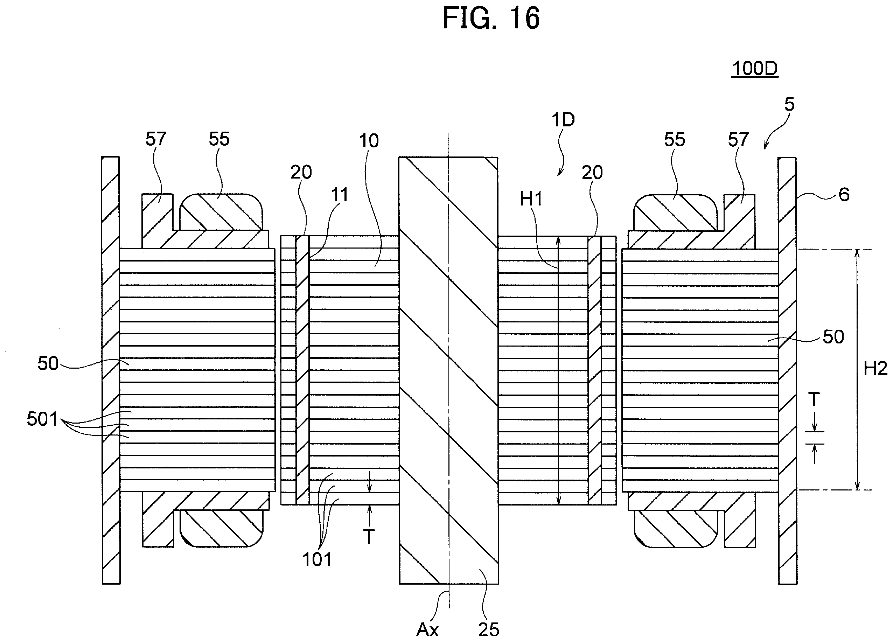

Next, a comparative example to be compared to the first embodiment will be described. FIG. 16 is a longitudinal-sectional view illustrating a motor 100D of the comparative example.

In the comparative example, the first core sheets 101 constituting the rotor core 10 and the second core sheets 501 constituting the stator core 50 are formed of the same electromagnetic steel sheet. The electromagnetic steel sheet has a thickness T of 3.5 mm, a Si content of 3.5%, a Vickers hardness Hv of 205, and an iron loss density of 0.98 W/kg.

The length H1 of the rotor core 10 in the axial direction is 50 mm, while the length H2 of the stator core 50 in the axial direction is 45 mm.

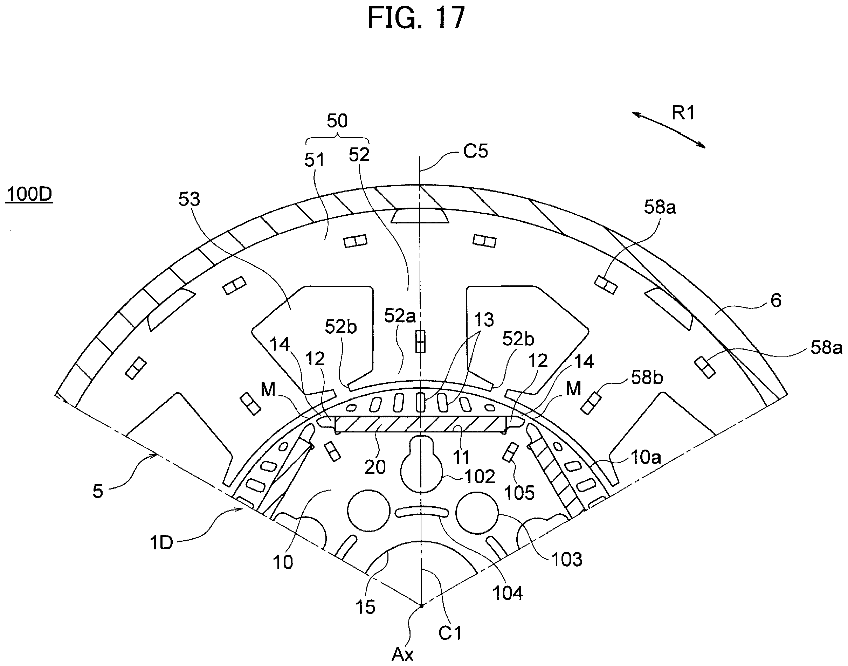

FIG. 17 is an enlarged diagram illustrating facing portions of the rotor 1 and the stator 5 in the comparative example. The rotor 1 of the comparative example is configured in the same manner as the rotor 1 of the first embodiment except for the bridge portion 14. The stator 5 of the comparative example is configured in the same manner as the stator 5 of the first embodiment.

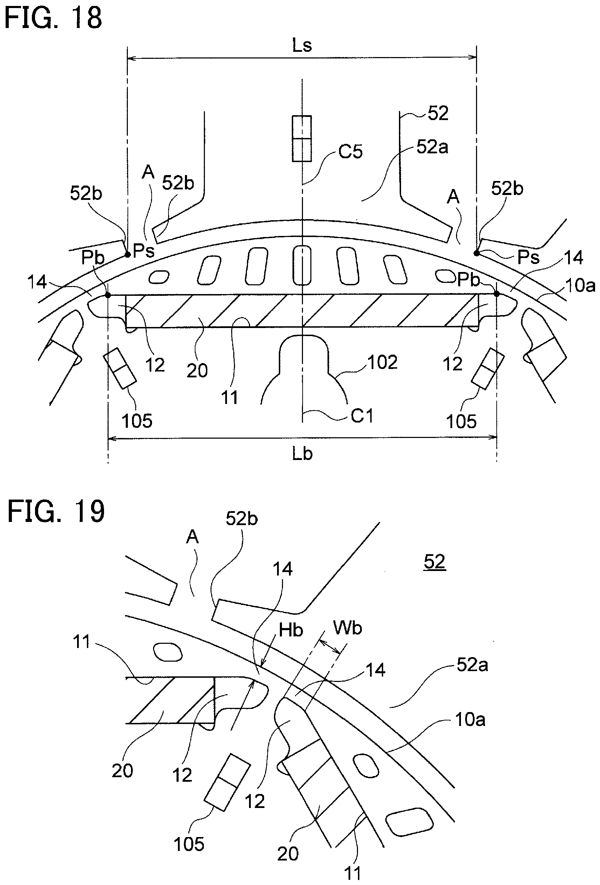

FIG. 18 is a diagram illustrating facing portions of the magnetic pole of the rotor 1 and the tooth 52. The minimum interval between two bridge portions 14 at both ends of the magnet insertion hole 11 is denoted by Lb. The minimum interval Lb is an interval between two end points Pb closest to each other in the two bridge portions 14 at both ends of the magnet insertion hole 11.

The maximum interval between two slot openings A facing the magnet insertion hole 11 is denoted by Ls. The maximum interval Ls is an interval between two end points Ps far from each other at inner circumferential side ends of the two slot openings A facing the magnet insertion hole 11.

In the comparative example, the minimum interval Lb between the two bridge portions 14 at both ends of the magnet insertion hole 11 is wider than the maximum interval Ls between the two slot openings A facing the magnet insertion hole 11 (Lb > Ls).

FIG. 19 is an enlarged diagram illustrating the bridge portions 14 and their surroundings. Since the thickness T of the first core sheet 101 is 0.35 mm, the minimum width Hb of the bridge portion 14 is set to 0.40 mm so as to suppress the bridge portion 14 from being deformed during press processing.

FIG. 20 is a diagram for explaining a short circuit of magnetic flux between adjacent permanent magnets 20. The minimum width Hb of the bridge portion 14 in the comparative example is 0.40 mm, and is wider than the minimum width Hb (0.30 mm) of the bridge portion 14 of the first embodiment. Thus, the magnetic flux flowing through the bridge portion 14 as indicated by the arrow F1 increases, as compared to in the first embodiment. That is, the short-circuit magnetic flux between adjacent permanent magnets 20 increases.

In the comparative example, the minimum interval Lb between the two bridge portions 14 at both ends of the magnet insertion hole 11 is wider than the maximum interval Ls between the two slot openings A facing the magnet insertion hole 11 (Lb > Ls). Thus, as illustrated in FIG. 20, the end point Ps of the tooth tip portion 52a of the tooth 52 is located closer to the pole center than the end point Pb of the bridge portion 14 in a state where the center of the permanent magnet 20 faces the tooth 52.

As a result, the magnetic flux can flow easily in the radial direction between the permanent magnet 20 and the tooth tip portion 52a as indicated by the arrow F2 in FIG. 20. That is, a short circuit of magnetic flux is more likely to occur between the permanent magnets 20 via the tooth tip portion 52a.

Next, a manufacturing method of a motor of the comparative example will be described. The first core sheets 101 and the second core sheets 501 are formed by punching the same electromagnetic steel sheet.

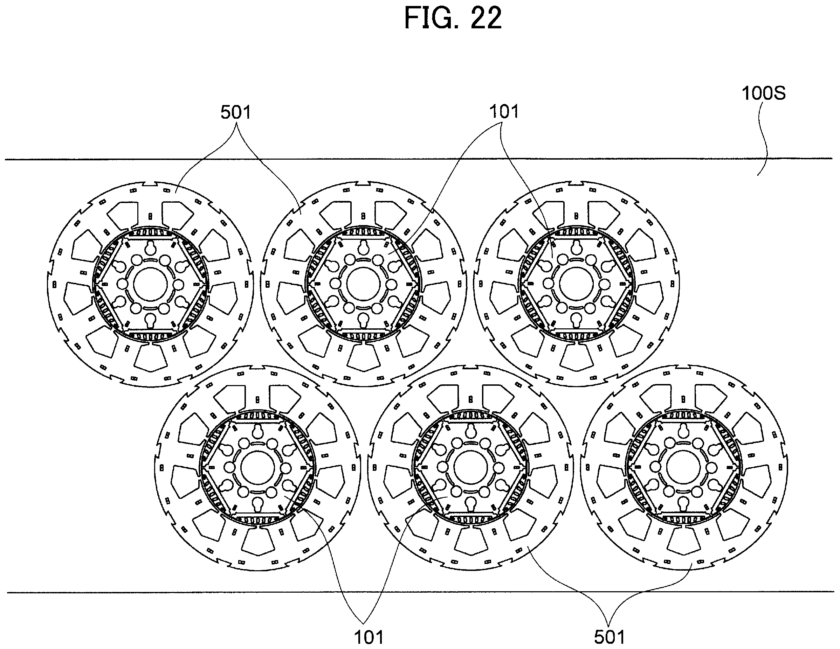

FIG. 21 is a flowchart illustrating a forming process of the first core sheets 101 and the second core sheets 501 by punching the electromagnetic steel sheet 100S. FIG. 22 is a plan view illustrating the electromagnetic steel sheet 100S from which the core sheets 101 and 501 are punched.

The electromagnetic steel sheet 100S has a thickness of 0.35 mm, a Si content of 3.5%, a Vickers hardness Hv of 205, and an iron loss density of 0.98 W/kg. The electromagnetic steel sheet 100S is a strip-shaped steel sheet that is elongated in one direction.

The electromagnetic steel sheet 100S is conveyed in the longitudinal direction (step S301), and then punched using a press die into the shapes of the rotor cores 10 to form the first core sheets 101 (step S302). A die clearance at this time is 8% of the thickness of the electromagnetic steel sheet 100S.

Next, the electromagnetic steel sheet 100S is punched into the shapes of the stator cores 50 to form the second core sheets 501 (step S303). A die clearance at this time is also 8% of the thickness of the electromagnetic steel sheet 100S.

In the comparative example, since the first core sheets 101 and the second core sheets 501 are formed of the same electromagnetic steel sheet 100S, as illustrated in FIG. 22, the electromagnetic steel sheet 100S can be punched to form the first core sheets 101, and then their surroundings can be punched to form the annular second core sheets 501, which results in good material yield.

Using the first core sheets 101 and the second core sheets 501 formed in this way, the rotor 1 and the stator 5 are assembled as described with reference to FIG. 10 to manufacture the motor 100.

(Functions)

Next, the functions of the first embodiment will be described in comparison with the comparative example. In the rotor 1, a short circuit of magnetic flux may occur between adjacent permanent magnets 20 via the bridge portions 14 located between the outer circumference 10a of the rotor core 10 and the magnet insertion holes 11.

For this reason, the minimum width Hb of the bridge portion 14 is desired to be narrow. However, making the minimum width Hb of the bridge portion 14 narrower may cause deformation of the bridge portion 14 during press processing. Thus, the minimum width Hb of the bridge portion 14 is generally set to be larger than or equal to the thickness of the electromagnetic steel sheet, for example, 0.40 mm.

In order to make the minimum width Hb of the bridge portion 14 narrower, it is desirable that the die clearance C is small. However, when the die clearance C is small, die wear or die galling may occur. The die wear or die galling is more likely to occur as the die clearance C decreases, and more likely to occur as the hardness of the electromagnetic steel sheet increases. Thus, the die clearance C is generally set to 5 to 15% of the thickness of the electromagnetic steel sheet.

Here, the iron loss generated in a core such as the rotor core 10 and stator core 50 includes hysteresis loss and eddy current loss. Hysteresis loss is the loss that occurs when the magnetic domain of the core changes the direction of its magnetic field due to an alternating magnetic field. Hysteresis loss $P_h$ is expressed by Steinmetz's experimental equation (1) as follows:

$$P_h = k_h f B_m^{1.6} \cdots (1)$$

where $k_h$ is a proportionality constant, f is the frequency, and $B_m$ is the maximum magnetic flux density.

Eddy current loss is caused by an eddy current generated inside the core. As the frequency of the alternating magnetic field increases, the ratio of eddy current loss increases. Eddy current loss $P_e$ is expressed by equation (2) as follows:

$$P_e = k_e (t f B_m)^2 / \rho \cdots (2)$$

where $k_e$ is a proportionality constant, t is the thickness of the electromagnetic steel sheet, f is the frequency, $B_m$ is the maximum magnetic flux density, and $\rho$ is the electrical resistivity of the electromagnetic steel sheet.

As the electrical resistivity $\rho$ of the electromagnetic steel sheet increases, the eddy current loss decreases. Thus, by using the electromagnetic steel sheet containing iron (Fe) with silicon (Si) added, the electrical resistivity $\rho$ is increased, and thus the eddy current loss can be reduced. However, the electromagnetic steel sheet is made harder and brittler as the Si content increases. If the hardness of the electromagnetic steel sheet is extremely high, the electromagnetic steel sheet is more likely to be broken, and it is difficult to perform press processing.

For this reason, the rotor core 10 and the stator core 50 are generally formed of electromagnetic steel sheets that contain 3 to 4% of silicon. If the Si content exceeds 40, the press processing is made difficult. Thus, the upper limit of the Si content is 40.

As is clear from the equation (2), eddy current loss is proportional to the square of the thickness T of the electromagnetic steel sheet. Thus, as the thickness T of the electromagnetic steel sheet decreases, the eddy current loss decreases, and the iron loss density decreases. The rotor core 10 and the stator core 50 are both generally composed of electromagnetic steel sheets, each having a thickness of 0.2 to 1.0 mm. If the thickness of the electromagnetic steel sheet is less than 0.2 mm, a rolling process is made difficult to perform, and the manufacturing cost of the electromagnetic steel sheet increases. Thus, the lower limit of the thickness of the electromagnetic steel sheet is 0.2 mm.

On the other hand, as the thickness of the electromagnetic steel sheet decreases, the volume of the bridge portion 14 of the rotor core 10 decreases. As a result, the bridge portion 14 is more likely to be deformed during press processing. The deformation of the bridge portion 14 refers to warping of the bridge portion 14 as illustrated in FIG. 15(B). In addition, the bridge portion 14 is more likely to be broken due to a centrifugal force during rotation of the rotor 1.

In order to make the bridge portion 14 narrower by the processing, it is necessary to reduce a sag, a fracture surface and a burr at a processed surface (FIG. 13) of the bridge portion 14, and also to increase a shear surface. For this reason, the die clearance C of the press die 8 needs to be decreased. However, if the hardness of the electromagnetic steel sheet is high, it is difficult to reduce the die clearance.

In general, the first core sheets 101 of the rotor core 10 and the second core sheets 501 of the stator core 50 are formed by punching the same electromagnetic steel sheet as described in the comparative example (FIG. 22). In this case, in order to reduce iron loss in the stator core 50, the electromagnetic steel sheet having a thickness of 0.35 mm and a Si content of 3.5% is often used. The die clearance C of the press die is set to 8% of the thickness of the electromagnetic steel sheet.

In contrast, in the first embodiment, the first core sheets 101 of the rotor core 10 and the second core sheets 501 of the stator core 50 are formed of different electromagnetic steel sheets. The first core sheet 101 has the thickness of 0.50 mm, the Si content of 3.3%, and the Vickers hardness Hv of 180, while the second core sheet 501 has the thickness of 0.35 mm, the Si content of 3.5%, and the Vickers hardness Hv of 205.

In the first embodiment, the die clearance C when the first core sheet 101 is formed by punching the electromagnetic steel sheet 10S is different from the die clearance C when the second core sheet 501 is formed by punching the electromagnetic steel sheet 50S.

The die clearance C when the first core sheet 101 is formed by punching the electromagnetic steel sheet 10S is set to 5% of the thickness T1 of the first core sheet 101. Meanwhile, the die clearance C when the second core sheet 501 is formed by punching the electromagnetic steel sheet 50S is set to 8% of the thickness T2 of the second core sheet 501.

By decreasing the Si content of the first core sheet 101, the hardness of the first core sheet 101 is lowered, so that die wear and die galling are less likely to occur even when the die clearance C is made small. Thus, die wear and die galling are less likely to occur even when the ratio of the die clearance C to the thickness T1 of the first core sheet 101 is decreased to 50, for example.

In addition, by setting the thickness T1 of the first core sheet 101 to 0.50 mm, the volume of the bridge portion 14 increases, and the bridge portion 14 is less likely to be deformed during press processing. As a result, the minimum width Hb of the bridge portion 14 can be made narrower to 0.30 mm, which is smaller than the thickness T1 of the first core sheet 101.

Because the minimum width Hb of the bridge portion 14 can be made narrower by the press processing in this way, a short circuit of magnetic flux between adjacent permanent magnets 20 can be suppressed. That is, a short circuit of magnetic flux between the permanent magnets 20 via the bridge portions 14 can be suppressed while suppressing an increase in manufacturing cost.

Here, the thickness of the first core sheet 101 of the first embodiment is, for example, 0.50 mm, which is thicker than that in the comparative example, namely 0.35 mm. The Si content of the first core sheet 101 of the first embodiment is, for example, 3.3%, which is smaller than that in the comparative example, namely 3.5%. Therefore, the iron loss density of the first core sheet 101 of the first embodiment is higher than the iron loss density of the first core sheet 101 of the comparative example.

When an iron loss density is measured by inducing the magnetic flux density of 1.0 T at a frequency of 50 Hz, the iron loss density of the first core sheet 101 of the first embodiment is 1.18 W/kg, while that of the comparative example is 0.98 W/kg. The iron loss density of the second core sheet 501 is 0.98 W/kg in both the comparative example and the first embodiment.

An iron loss during driving of the motor 100 is generated more in the stator core 50 than in the rotor core 10. The ratio of the iron loss generated in the rotor core 10 to that in the stator core 50 is 2:8.

The reason for this is as follows. That is, in the rotor core 10, the permanent magnets 20 are fixed and thus continuously generate constant magnetic flux, and thus a small change occurs in the magnetic flux inside the rotor core 10 due to rotation of the rotor 1. In contrast, in the stator core 50, magnetic flux flowing therein from the rotor 1 changes depending on the rotational position of the rotor 1, and thus the magnetic flux largely changes. Thus, the iron loss generated in the rotor core 10 is smaller than the iron loss generated in the stator core 50.

That is, even when the iron loss density of the first core sheet 101 of the rotor core 10 is high, an increase in the iron loss in the entire motor 100 is small.

The iron loss density of the first core sheet 101 is 0.98 W/kg in the comparative example, and 1.18 W/kg in the first embodiment. In this case, the iron loss generated in the rotor core 10 of the first embodiment is 1.2 (= 1.18/0.98) times higher than that of the comparative example. However, the comparative example and the first embodiment are the same in the iron loss generated in the stator core 50, which occupies 800 of the entire iron loss. As a result, the iron loss in the motor 100 of the first embodiment is 1.04 (= 0.2 × 1.2 + 0.8 × 1.0) times higher than the iron loss in the motor of the comparative example, which means that an increase rate in the iron loss is 40.

Meanwhile, in the first embodiment, as illustrated in FIG. 4, the minimum interval Lb between the two bridge portions 14 at both ends of the magnet insertion hole 11 and the maximum interval Ls between the two slot openings A facing the magnet insertion hole 11 satisfy Lb < Ls.

In this case, the end point Pb of the bridge portion 14 is located closer to the pole center than the end point Ps of the tooth tip portion 52a in a state where the center of the permanent magnet 20 faces the tooth 52. Thus, the magnetic flux between the permanent magnet 20 and the tooth tip portion 52a flows around to the pole center side (see FIG. 6), and thus a short circuit of magnetic flux via the tooth tip 52a is less likely to occur.

That is, a short circuit of magnetic flux between the permanent magnets 20 can be effectively suppressed when the minimum width Hb of the bridge portion 14 is smaller than the thickness T1 of the first core sheet 101 and Lb < Ls is satisfied. By suppressing a short circuit of magnetic flux between the permanent magnets 20, the amount of magnetic flux interlinked with the coil 55 of the stator 5 increases.

For example, in the motor 100 of the first embodiment where the minimum width Hb of the bridge portion 14 is 0.30 mm and Lb < Ls is satisfied, the amount of magnetic flux interlinked with the coil 55 of the stator 5 is improved by 4% through the reduction of a short circuit of magnetic flux at the bridge portion 14, as compared to the motor of the comparative example where the minimum width Hb of the bridge portion 14 is 0.40 mm and Lb > Ls is satisfied.

The magnet torque of the rotor 1 is determined by the product of the magnetic flux interlinked with the coil 55 of the stator 5 and the current flowing through the coil 55. Thus, by increasing the amount of magnetic flux interlinked with the coil 55, the current for generating the magnet torque can be reduced, and thus copper loss that is generated in the coil 55 can be reduced.

For example, when the amount of magnetic flux interlinked with the coil 55 of the stator 5 is increased by 40, the current for generating the magnetic torque is reduced by 40, in other words, is 0.96 times of the original current. Because the copper loss of the coil 55 is proportional to the square of the current, the copper loss is 0.92 (= $0.96^2$) times of the original copper loss and therefore is reduced by 80.

That is, by forming the rotor core 10 using the first core sheets 101, which have an iron loss density higher than that of the second core sheets 501 of the stator core 50, and by setting the minimum width Hb of the bridge portion 14 smaller than the thickness T1 of the first core sheet 101, the copper loss can be reduced, although the iron loss is increased.

In the first embodiment, the copper loss of the rotor core 10 is reduced by 80, and the iron loss of the motor 100 is increased by 40, as compared to the comparative example. That is, a decrease in the copper loss is more than an increase in the iron loss. Therefore, the motor efficiency can be improved.

In general, as the thickness of the electromagnetic steel sheet increases and the iron loss density thereof increases, the price per unit weight of the electromagnetic steel sheet decreases. In this embodiment, since the first core sheet 101 of the rotor core 10 is thick and its iron loss density is high, an inexpensive electromagnetic steel sheet can be used, and thus the manufacturing cost of the motor 100 can be reduced.

In the first embodiment, the thickness T1 of the first core sheet 101 is thicker than in the comparative example, but the length H1 of the rotor core 10 is the same as that of the comparative example. Thus, the number of stacked first core sheets 101 in the rotor core 10 in the first embodiment is smaller than that in the comparative example. As the number of stacked first core sheets 101 decreases, the number of times of punching the electromagnetic steel sheet 10S decreases, and thus the manufacturing cost can be reduced.

As the thickness T1 of the first core sheet 101 increases, the length in the axial direction of the bridge portion 14 per first core sheet 101 increases. Thus, even when the minimum width Hb of the bridge portion 14 is made narrower, the volume of the bridge portion 14 per first core sheet 101 is made larger. Thus, the bridge portion 14 can be suppressed from being broken due to the centrifugal force during rotation of the rotor 1.

The suppression of a short circuit of magnetic flux between the permanent magnets 20 leads to an increase in the amount of magnetic flux from the permanent magnets 20 interlinked with the coil 55, so that the size of each permanent magnet 20 can be reduced by an amount of increase in magnetic flux. When the amount of magnetic flux interlinked with the coil 55 of the stator 5 is increased by 4% as compared to the comparative example, the same level of torque as that in the comparative example can be generated even when the length in the axial direction of each permanent magnet 20 is decreased by 40. As a result, the motor 100 can be downsized, and the manufacturing cost thereof can be reduced.

Further, in the motor 100 where the rotor core 10 protrudes from the stator core 50 in the axial direction, portions of the permanent magnets 20 disposed in protruding portions of the rotor core 10 do not face the stator core 50. Thus, magnetic flux emanating from the portions of the permanent magnet 20 disposed in the protruding portions of the rotor core 10 is more likely to flow to the adjacent permanent magnet 20. The above configuration that suppresses a short circuit of magnetic flux via the bridge portion 14 is useful particularly in the motor 100 where the rotor core 10 protrudes from the stator core 50 in the axial direction.

In forming the bridge portions 14, the electromagnetic steel sheet 10S is punched to form the magnet insertion holes 11 as illustrated in FIG. 14(A), and then the electromagnetic steel sheet 10S is punched to form the outer circumference 10a of the rotor core 10 as illustrated in FIG. 14(B). At the time of forming the outer circumference 10a of the rotor core 10, the bridge portions 14 can be held by the plate holder 83 as illustrated in FIG. 15 (A) to suppress the deformation of the bridge portions 14. That is, the bridge portions 14 with the narrow minimum width Hb can be formed easily.

In the comparative example, the first core sheets 101 and the second core sheets 501 are formed of the same electromagnetic steel sheet 100S. Thus, the plate holder 83 for holding the bridge portion 14 must be disposed in consideration of the position of the press die for punching the electromagnetic steel sheet 100S into the shape of the stator core 50, and thus it is difficult to dispose the plate holder 83.

However, in this embodiment, the first core sheet 101 and the second core sheet 501 are formed of different electromagnetic steel sheets 10S and 50S, and thus it is made easier to dispose the plate holder 83 for holding the bridge portions 14.

In the first embodiment, in order to suppress the deformation of the bridge portion 14 with the narrow minimum width Hb during press processing, the following requirements (1) to (4) are satisfied.

(1) The thickness T1 of the first core sheet 101 of the rotor core 10 is thicker than the thickness T2 of the second core sheet 501 of the stator core 50.
(2) The iron loss density of the first core sheet 101 is higher than the iron loss density of the second core sheet 501.

(3) The Si content of the first core sheet 101 is smaller than the Si content of the second core sheet 501.

(4) The hardness of the first core sheet 101 is lower than the hardness of the second core sheet 501.

However, the effect of improving the processability of the bridge portion 14 can be obtained even when any one of these requirements (1) to (4) is satisfied. Thus, the minimum width Hb of the bridge portion 14 can be made narrower by the press processing, and a short circuit of magnetic flux between adjacent permanent magnets 20 can be suppressed.

(Effects of Embodiment)

As described above, in the motor 100 of the first embodiment, the rotor core 10 is formed of the first core sheets 101, and the stator core 50 is formed of the second core sheets 501, wherein the thickness T1 of the first core sheet 101 is thicker than the thickness T2 of the second core sheet 501. The bridge portion 14 is formed between the outer circumference 10a of the rotor core 10 and the magnet insertion hole 11, and the minimum width Hb of the bridge portion 14 in the radial direction is smaller than the thickness T1 of the first core sheet 101.

Since the minimum width Hb of the bridge portion 14 is smaller than the thickness T1 of the first core sheet 101, a short circuit of magnetic flux between adjacent permanent magnets 20 can be suppressed. Since the thickness T1 of the first core sheet 101 is thicker than the thickness T2 of the second core sheet 501, the volume of the bridge portion 14 per first core sheet 101 increases. As a result, the deformation of the bridge portion 14 during press processing can be suppressed even when the minimum width Hb of the bridge portion 14 is made narrower. Thus, the bridge portion 14 can be suppressed from being broken due to the centrifugal force during rotation of the rotor 1.

The iron loss density of the first core sheet 101 is higher than the iron loss density of the second core sheet 501. This is because the thickness T1 of the first core sheet 101 is thicker than the thickness T2 of the second core sheet 501, and the Si content of the first core sheet 101 is smaller than the Si content of the second core sheet 501. Thus, the deformation of the bridge portion 14 during press processing can be suppressed, and the die clearance C can be reduced without causing die wear and die galling. As a result, the bridge portion 14 with the narrow minimum width Hb can be formed by press processing, and a short circuit of magnetic flux between the permanent magnets 20 can be suppressed.

Since the Si content of the first core sheet 101 is smaller than the Si content of the second core sheet 501, the hardness of the first core sheet 101 is higher than the hardness of the second core sheet 501. Thus, the die clearance C can be reduced without causing die wear and die galling during the press processing of the first core sheets 101. As a result, the bridge portion 14 with the narrow minimum width Hb can be formed by the press processing, and a short circuit of magnetic flux between the permanent magnets 20 can be suppressed.

Further, since the hardness of the first core sheet 101 is lower than the hardness of the second core sheet 501, the die clearance C can be reduced without causing die wear and die galling during the press processing of the first core sheets 101. As a result, the bridge portion 14 with the narrow minimum width Hb can be formed by the press processing, and a short circuit of magnetic flux between the permanent magnets 20 can be suppressed.

In addition, since the minimum interval Lb between the two bridge portions 14 at both ends of the magnet insertion hole 11 and the maximum interval Ls between the two slot openings A facing the magnet insertion hole 11 satisfy Lb < Ls, a short circuit of magnetic flux between the permanent magnets 20 through the tooth tip portion 52a of the tooth 52 can be suppressed in a state where the center of the permanent magnet 20 faces the tooth 52.

Since the minimum width Hb of the bridge portion 14 is smaller than the thickness T2 of the second core sheet 501, the magnetic flux is less likely to flow through the bridge portion 14, so that a short circuit of magnetic flux between adjacent permanent magnets 20 can be suppressed.

The stator core 50 is composed of a plurality of split cores 50A which are combined in the circumferential direction, and thus it is possible to punch the electromagnetic steel sheet 50S into the shape in which the split cores 50A are arranged side by side linearly. Accordingly, the electromagnetic steel sheet 50S can be effectively utilized and the manufacturing cost of the motor 100 can be reduced.

Since the thickness of the first core sheet 101 is more than 0.35 mm, and the thickness of the second core sheet 501 is 0.35 mm or less, the deformation of the bridge portion 14 during press processing can be suppressed, and an increase in the iron loss of the stator core 50 can also be suppressed.

Since the Si content of the first core sheet 101 is less than 3.5%, and the Si content of the second core sheet 501 is 3.50 or more, die wear and die galling during the press processing of the first core sheets 101 can be suppressed, and an increase in the iron loss of the stator core 50 can also be suppressed.

Furthermore, since the Vickers hardness of the first core sheet 101 is less than 200, and the Vickers hardness of the core sheet 500 is 200 or more, die wear and die galling during the press processing of the first core sheets 101 can be suppressed, and the rigidity of the stator core 50 can be enhanced.

**Second Embodiment**

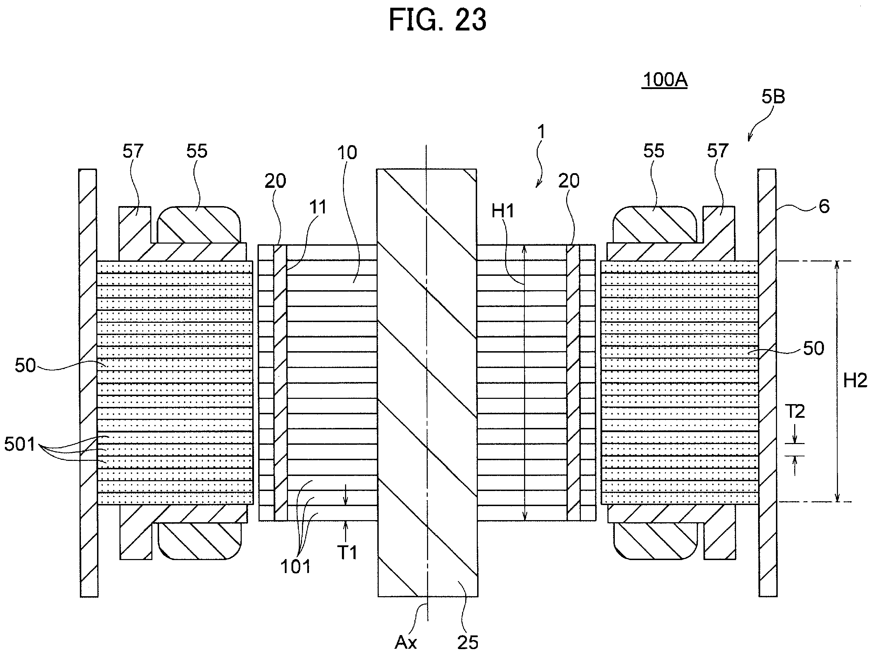

FIG. 23 is a longitudinal-sectional view illustrating a motor 100A of a second embodiment. In the second embodiment, the stator core 50 of the stator 5 is subjected to an annealing process to improve its magnetic properties. The motor 100A of the second embodiment is configured in the same manner as the motor 100 of the first embodiment except that the stator core 50 is subjected to the annealing process.

When the second core sheets 501 are formed by punching the electromagnetic steel sheet 50S, a strain occurs on the processed surface due to the shearing force and remains as the residual strain. The residual strain may change the magnetic properties of the second core sheet 501.

In the second embodiment, the second core sheets 501 obtained by punching the electromagnetic steel sheet 50S is subjected to the annealing process. This eliminates the residual strain that has occurred due to the punching and thus improves the magnetic properties of the second core sheets 501. Thus, an iron loss in the stator core 50 can be reduced and motor efficiency can be improved.

Meanwhile, in the rotor core 10, the change in the magnetic flux is smaller, and thus the iron loss is smaller as compared to the stator core 50. Further, when the residual strain remains in the bridge portions 14 of the rotor core 10, the effect of suppressing a short circuit of magnetic flux between the permanent magnets 20 increases, which is desirable. Therefore, it is desirable that the annealing process is performed on the stator core 50, but not on the rotor core 10.

As described above, the second embodiment can improve motor efficiency by reducing iron loss in the stator core 50, in addition to achieving the effect described in the first embodiment.

**(Compressor)**

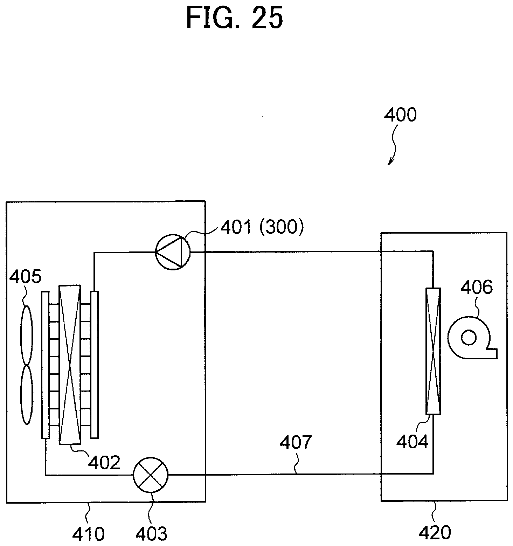

FIG. 24 is a longitudinal-sectional view illustrating the compressor 300 to which the motor of each embodiment is applicable. The compressor 300 is a rotary compressor, and is used, for example, in a refrigeration cycle apparatus 400 (FIG. 25).

The compressor 300 includes a compression mechanism 310, the motor 100 that drives the compression mechanism 310, the shaft 25 that connects the compression mechanism 310 and the motor 100, and a sealed container 301 that houses these components.

The sealed container 301 is a container made of a steel sheet and has a cylindrical shell and a container top that covers the top of the shell. The stator 5 of the motor 100 is incorporated in the shell of the sealed container 301 by shrink-fitting, press-fitting, welding, or the like.

The container top of the sealed container 301 is provided with a discharge pipe 307 for discharging a refrigerant to the outside and terminals 305 for supplying electric power to the motor 100. An accumulator 302 that stores a refrigerant gas is attached to the outside of the sealed container 301. At the bottom of the sealed container 301, refrigerant oil is retained to lubricate a bearing of the compression mechanism 310.

The compression mechanism 310 has a cylinder 311 with a cylinder chamber 312, a rolling piston 314 fixed to the shaft 25, a vane dividing the inside of the cylinder chamber 312 into a suction side and a compression side, and an upper frame 316 and a lower frame 317 which close both ends of the cylinder chamber 312 in the axial direction.

Both the upper frame 316 and lower frame 317 have bearings that rotatably support the shaft 25. An upper discharge muffler 318 and a lower discharge muffler 319 are installed on the upper frame 316 and the lower frame 317, respectively.

The cylinder 311 is provided with the cylinder chamber 312 having a cylindrical shape about the axis Ax. An eccentric shaft portion 25a of the shaft 25 is located inside the cylinder chamber 312. The eccentric shaft portion 25a has the center that is eccentric relative to the axis Ax. The rolling piston 314 is fitted to the outer circumference of the eccentric shaft portion 25a. When the motor 100 rotates, the eccentric shaft portion 25a and the rolling piston 314 rotate eccentrically within the cylinder chamber 312.

A suction port 313 through which the refrigerant gas is sucked into the cylinder chamber 312 is formed in the cylinder 311. A suction pipe 303 that communicates with the suction port 313 is attached to the sealed container 301, whereby the refrigerant gas is supplied from the accumulator 302 to the cylinder chamber 312 via the suction pipe 303.

The compressor 300 is supplied with a mixture of low-pressure refrigerant gas and a liquid refrigerant from a refrigerant circuit of the refrigeration cycle apparatus 400 (FIG. 25). If the liquid refrigerant flows into and is compressed by the compression mechanism 310, it may cause the failure of the compression mechanism 310. Thus, the accumulator 302 separates the refrigerant into the liquid refrigerant and the refrigerant gas and supplies only the refrigerant gas to the compression mechanism 310.

For example, R410A, R407C, or R22 may be used as the refrigerant, but it is desirable to use a refrigerant with a low global warming potential (GWP) from the viewpoint of preventing global warming. Examples of the usable low-GWP refrigerant include the following.

(1) First, a halogenated hydrocarbon having a carbon-carbon double bond in its composition, for example, HFO (Hydro-Fluoro-Olefin)-1234yf ($CF_3CF=CH_2$), can be used. The GWP of HFO-1234yf is 4.

(2) A hydrocarbon having a carbon-carbon double bond in its composition, for example, R1270 (propylene), may be used. The GWP of R1270 is 3, which is lower than that of HFO-1234yf, but R1270 has higher flammability than HFO-1234yf.

(3) A mixture containing at least one of a halogenated hydrocarbon having a carbon-carbon double bond in its composition and a hydrocarbon having a carbon-carbon double bond in its composition may be used. For example, a mixture of HFO-1234yf and R32 may be used. HFO-1234yf described above is a low-pressure refrigerant and thus tends to increase a pressure loss, which may lead to reduction in the performance of the refrigeration cycle (particularly, an evaporator). For this reason, a mixture of the HFO-1234yf with R32 or R41, which is a high-pressure refrigerant compared to HFO-1234yf, is desirably used in practice.

The operation of the compressor 300 is as follows. The refrigerant gas supplied from the accumulator 302 is supplied through the suction pipe 303 into the cylinder chamber 312 of the cylinder 311. When the motor 100 is driven to rotate the rotor 1, the shaft 25 rotates with the rotor 1. Then, the rolling piston 314 fitted to the shaft 25 eccentrically rotates inside the cylinder chamber 312, thereby compressing the refrigerant in the cylinder chamber 312. The compressed refrigerant passes through the discharge mufflers 318 and 319, further rises inside the sealed container 301 through the through holes 102 and 103, and the like of the motor 100 (FIG. 1), and is then discharged through the discharge pipe 307.

The motor described in each embodiment has a high motor efficiency because a short circuit of magnetic flux between the permanent magnets 20 is suppressed. Thus, the operating efficiency of the compressor 300 can be improved.

**(Refrigeration Cycle Apparatus)**

Next, the refrigeration cycle apparatus 400 to which the motor of each embodiment is applicable will be described. FIG. 25 is a diagram illustrating the configuration of the refrigeration cycle apparatus 400. The refrigeration cycle apparatus 400 is an air conditioner in this example, but is not limited to thereto and may be, for example, a refrigerator.

The refrigeration cycle apparatus 400 includes a compressor 401, a condenser 402, a decompressor 403, and an evaporator 404. The compressor 401, the condenser 402, the decompressor 403, and the evaporator 404 are connected together by a refrigerant pipe 407 to configure the refrigeration cycle. That is, the refrigerant circulates through the compressor 401, the condenser 402, the decompressor 403, and the evaporator 404 in this order.

The compressor 401, the condenser 402, and the decompressor 403 are provided in an outdoor unit 410. The compressor 401 is constituted by of the compressor 300 described with reference to FIG. 24. The outdoor unit 410 is provided with an outdoor fan 405. The evaporator 404 is provided in an indoor unit 420. The indoor unit 420 is provided with an indoor fan 406.

The operation of the refrigeration cycle apparatus 400 is as follows. The compressor 401 compresses the sucked refrigerant and sends out the compressed refrigerant. The condenser 402 exchanges heat between the refrigerant sent from the compressor 401 and the outdoor air to condense the refrigerant and sends out the condensed refrigerant as a liquid refrigerant. The decompressor 403 expands the liquid refrigerant sent from the condenser 402 and then sends out the expanded refrigerant as a low-temperature and low-pressure liquid refrigerant.

The evaporator 404 exchanges heat between indoor air and the low-temperature and low-pressure liquid refrigerant sent from the decompressor 403 to evaporate the refrigerant and then sends out the evaporated refrigerant as a refrigerant gas. Thus, air from which heat is removed in the evaporator 404 is supplied to the interior of a room by the indoor fan 406.

The refrigeration cycle apparatus 400 includes the compressor 300 with high operating efficiency as described above, and thus the operating efficiency of the refrigeration cycle apparatus 400 can be improved.

Although the desirable embodiments have been specifically described above, the present disclosure is not limited to the above embodiments, and various modifications or changes can be made to those embodiments.

**DESCRIPTION OF REFERENCE CHARACTERS**

1: rotor; 5: stator; 8: press die; 10: rotor core; 10S: electromagnetic steel sheet (first electromagnetic steel sheet); 10a: outer circumference; 11: magnet insertion hole; 12: flux barrier; 14: bridge portion; 15: center hole; 20: permanent magnet; 25: shaft; 50: stator core; 50A: split core; 50S: electromagnetic steel sheet (second electromagnetic steel sheet); 51: yoke; 52: tooth; 52a: tooth tip portion; 52b: end surface; 53: slot; 54: split surface; 55: coil; 81: die; 82: punch; 83: plate holder; 100, 100A: motor; 101: first core sheet; 300: compressor; 301: sealed container; 310: compression mechanism; 400: refrigeration cycle apparatus; 401: four-way valve; 402: condenser; 403: decompressor; 404: evaporator; 407: refrigerant pipe; 501: second core sheet; A: slot opening; C: die clearance.

**Claims**

1. A motor comprising:

   a rotor having a rotor core having an annular shape about an axis and formed of a first core sheet subjected to press processing, and a permanent magnet embedded in the rotor core; and

a stator surrounding the rotor from outside in a radial direction about the axis, the stator having a stator core formed of a second core sheet subjected to press processing,

wherein a thickness of the first core sheet is thicker than a thickness of the second core sheet,

wherein the rotor core has an outer circumference, a magnet insertion hole in which the permanent magnet is inserted, and a bridge portion between the outer circumference and the magnet insertion hole, and

wherein a minimum width of the bridge portion in the radial direction is smaller than the thickness of the first core sheet.

2. A motor comprising:

a rotor having a rotor core having an annular shape about an axis and formed of a first core sheet subjected to press processing, and a permanent magnet embedded in the rotor core; and a stator surrounding the rotor from outside in a radial direction about the axis, the stator having a stator core formed of a second core sheet subjected to press processing,

wherein an iron loss density of the first core sheet is higher than an iron loss density of the second core sheet,

wherein the rotor core has an outer circumference, a magnet insertion hole in which the permanent magnet is inserted, and a bridge portion between the outer circumference and the magnet insertion hole, and

wherein a minimum width of the bridge portion in the radial direction is smaller than the thickness of the first core sheet.

3. A motor comprising:

a rotor having a rotor core having an annular shape about an axis and formed of a first core sheet subjected to press processing, and a permanent magnet embedded in the rotor core; and a stator surrounding the rotor from outside in a radial direction about the axis, the stator having a stator core formed of a second core sheet subjected to press processing,

wherein a Si content of the first core sheet is smaller than a Si content of the second core sheet,

wherein the rotor core has an outer circumference, a magnet insertion hole in which the permanent magnet is inserted, and a bridge portion between the outer circumference and the magnet insertion hole, and

wherein a minimum width of the bridge portion in the radial direction is smaller than the thickness of the first core sheet.

4. A motor comprising:

a rotor having a rotor core having an annular shape about an axis and formed of a first core sheet subjected to press processing, and a permanent magnet embedded in the rotor core; and a stator surrounding the rotor from outside in a radial direction about the axis, the stator having a stator core formed of a second core sheet subjected to press processing,

wherein a hardness of the first core sheet is lower than a hardness of the second core sheet,

wherein the rotor core has an outer circumference, a magnet insertion hole in which the permanent magnet is inserted, and a bridge portion between the outer circumference and the magnet insertion hole, and

wherein a minimum width of the bridge portion in the radial direction is smaller than the thickness of the first core sheet.

5. The motor according to any one of claims 1 to 4, wherein the rotor core has two bridges on both sides of the magnet insertion hole in a circumferential direction about the axis,

wherein the stator has a yoke having an annular shape about the axis, a tooth extending from the yoke toward the rotor, and two slot openings formed on both sides of the tooth in the circumferential direction, and

wherein a maximum interval Ls between the two slot openings and a minimum interval Lb between the two bridges satisfy Lb < Ls.

6. The motor according to any one of claims 1 to 5, wherein a minimum width of the bridge portion in the radial direction is smaller than the thickness of the second core sheet.

7. The motor according to any one of claims 1 to 6, wherein the stator core has a plurality of split cores 50A that are combined in an annular shape.

8. The motor according to any one of claims 1 to 7, wherein the stator core is subjected to an annealing process.

9. The motor according to any one of claims 1 to 8, wherein a length of the rotor core in a direction of the axis is longer than a length of the stator core in the direction of the axis.

10. The motor according to any one of claims 1 to 9,

wherein the first core sheet has a thickness of more than 0.35 mm, and
wherein the second core sheet has a thickness of 0.35 mm or less.

11. The motor according to any one of claims 1 to 10, wherein the first core sheet has a Si content of less than 3.5%, and
wherein the second core sheet has a Si content of 3.50 or more.

12. The motor according to any one of claims 1 to 11, wherein the first core sheet has a Vickers hardness of lower than 200, and
wherein the second core sheet has a Vickers hardness of 200 or higher.

13. A compressor comprising:

the motor according to any one of claims 1 to 12; and
a compression mechanism to be driven by the motor.

14. A refrigeration cycle apparatus comprising the compressor according to claim 13, a condenser, a decompressor, and an evaporator.

15. A manufacturing method of a motor, comprising the steps of:

punching a first electromagnetic steel sheet to form a first core sheet;
punching a second electromagnetic steel sheet to form a second core sheet;
forming an annular rotor core of the first core sheet;
embedding a permanent magnet in the rotor core to obtain a rotor;
forming a stator core of the second core sheet; and
winding a coil on the stator core to form a stator, wherein the rotor core has an outer circumference, a magnet insertion hole, and a bridge portion between the outer circumference and the magnet insertion hole, and
wherein in the punching step of the first electromagnetic steel sheet, a die clearance at least when the bridge portion is formed is narrower than a die clearance in the punching step of the second electromagnetic steel sheet.

16. The manufacturing method of the motor according to claim 15, wherein a minimum width of the bridge portion in a radial direction of the rotor core is smaller than a thickness of the first core sheet.

17. The manufacturing method of the motor according to claim 15 or 16,

wherein the stator core has a plurality of split cores that are combined in an annular shape, and
wherein in the step of punching the first electromagnetic steel sheet, the first electromagnetic steel sheet is punched so that the plurality of split cores are arranged side by side linearly.

18. The manufacturing method of the motor according to any one of claims 15 to 17, further comprising the step of:
performing an annealing process on the stator core after the step of forming the stator core.

# FIG. 1

# FIG. 2

EP 4 220 897 A1

# FIG. 3

## FIG. 4

## FIG. 5

# FIG. 6

## FIG. 7(A)

START

CONVEY FIRST ELECTROMAGNETIC STEEL SHEET
(THICKNESS : 0.50mm)
(Si CONTENT : 3.3%)
(Hv HARDNESS: 180) — S11

FORM FIRST CORE SHEET
(CLEARANCE OF BRIDGE PORTION: 5% OF SHEET THICKNESS) — S12

END

## FIG. 7(B)

START

CONVEY SECOND ELECTROMAGNETIC STEEL SHEET
(THICKNESS : 0.35mm)
(Si CONTENT : 3.5%)
(Hv HARDNESS: 205) — S21

FORM SECOND CORE SHEET
(CLEARANCE: 8% OF SHEET THICKNESS) — S22

END

# FIG. 8

101(10)

10S

101(10)

FIG. 9

# FIG. 10

START

STACK FIRST CORE SHEETS TO FORM ROTOR CORE — S101

ATTACH PERMANENT MAGNET TO ROTOR CORE — S102

START

STACK SECOND CORE SHEETS TO FORM SPLIT CORES — S201

COMBINE SPLIT CORES TO FORM STATOR CORE — S202

ATTACH INSULATING PORTION TO STATOR CORE — S203

WIND COILS ON STATOR CORE — S204

INCORPORATE ROTOR IN STATOR — S110

END

EP 4 220 897 A1

# FIG. 11

501(50)  D  50S

D  501(50)

FIG. 12(A)

FIG. 12(B)

# FIG. 13

S

SAG

SHEAR
SURFACE

T

FRACTURE
SURFACE

BURR

FIG. 14(A)

FIG. 14(B)

FIG. 15(A)

FIG. 15(B)

FIG. 16

EP 4 220 897 A1

# FIG. 17

EP 4 220 897 A1

## FIG. 18

## FIG. 19

# FIG. 20

# FIG. 21

START

CONVEY ELECTROMAGNETIC
STEEL SHEET
(THICKNESS : 0.35mm)
(Si CONTENT : 3.5%)
(Hv HARDNESS: 205) — S301

FORM FIRST CORE SHEET
(CLEARANCE: 8% OF
SHEET THICKNESS) — S302

FORM SECOND CORE SHEET
(CLEARANCE: 8% OF
SHEET THICKNESS) — S303

END

FIG. 22

FIG. 23

# FIG. 24

# FIG. 25

**INTERNATIONAL SEARCH REPORT**

| | International application No. |
| --- | --- |
| | PCT/JP2020/036684 |

**A. CLASSIFICATION OF SUBJECT MATTER**
H02K 1/27(2006.01)i
FI: H02K1/27 501K; H02K1/27 501M

According to International Patent Classification (IPC) or to both national classification and IPC

**B. FIELDS SEARCHED**

Minimum documentation searched (classification system followed by classification symbols)
H02K1/27

Documentation searched other than minimum documentation to the extent that such documents are included in the fields searched
Published examined utility model applications of Japan       1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2015-173582 A (MITSUI HIGH-TEC, INC.) 01 October 2015 (2015-10-01) paragraphs [0028]-[0033], fig. 1-3 | 1<br>2-18 |
| Y | JP 2008-113531 A (HITACHI, LTD.) 15 May 2008 (2008-05-15) paragraphs [0077]-[0080], [0099]-[0100], [0105]-[0107], [0116]-[0117] | 2-18 |
| Y | JP 2004-96807 A (MITSUBISHI ELECTRIC CORP.) 25 March 2004 (2004-03-25) fig. 4 | 5-14 |
| Y | WO 2014/128938 A1 (MITSUBISHI ELECTRIC CORP.) 28 August 2014 (2014-08-28) paragraphs [0015], [0020], [0022] | 7-14 |
| Y | JP 10-271716 A (MATSUSHITA ELECTRIC INDUSTRIAL CO., LTD.) 09 October 1998 (1998-10-09) fig. 2 | 17-18 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 November 2020 (25.11.2020) | 08 December 2020 (08.12.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/036684

| Patent Documents referred in the Report | Publication Date | Patent Family | Publication Date |
|---|---|---|---|
| JP 2015-173582 A | 01 Oct. 2015 | US 2015/0244244 A1 paragraphs [0049]-[0058], fig. 1A-3B | |
| JP 2008-113531 A | 15 May 2008 | (Family: none) | |
| JP 2004-96807 A | 25 Mar. 2004 | (Family: none) | |
| WO 2014/128938 A1 | 28 Aug. 2014 | (Family: none) | |
| JP 10-271716 A | 09 Oct. 1998 | (Family: none) | |

Form PCT/ISA/210 (patent family annex) (January 2015)

**EP 4 220 897 A1**

**Patent documents cited in the description**

- JP 2011114927 A